(19) Europäisches Patentamt

European Patent Office

Office européen des brevets

(11) **EP 1 228 930 B1**

(12) **EUROPEAN PATENT SPECIFICATION**

(45) Date of publication and mention
of the grant of the patent:
**07.12.2005 Bulletin 2005/49**

(51) Int Cl.⁷: **B60R 21/22**, B60R 21/26

(21) Application number: **02001918.8**

(22) Date of filing: **31.01.2002**

(54) **Head protection air bag system**

Kopfschutzairbagsystem

Système de sac gonflable de protection de tête

(84) Designated Contracting States:
**DE FR GB**

(30) Priority: **31.01.2001 JP 2001023235**
**24.04.2001 JP 2001125946**
**27.04.2001 JP 2001132049**
**10.05.2001 JP 2001140323**
**16.05.2001 JP 2001146242**

(43) Date of publication of application:
**07.08.2002 Bulletin 2002/32**

(73) Proprietor: **TOYODA GOSEI CO., LTD.**
**Nishikasugai-gun, Aichi-ken 452-8564 (JP)**

(72) Inventors:
• **Tanase, Toshinori, c/o Toyoda Gosei Co., Ltd.**
**Nishikasugai-gun, Aichi 452-8564 (JP)**
• **Yamada, Ikuo, c/o Toyoda Gosei Co., Ltd.**
**Nishikasugai-gun, Aichi 452-8564 (JP)**
• **Ochiai, Yasuo, c/o Toyoda Gosei Co., Ltd.**
**Nishikasugai-gun, Aichi 452-8564 (JP)**
• **Ogata, Tetsuya, c/o Toyoda Gosei Co., Ltd.**
**Nishikasugai-gun, Aichi 452-8564 (JP)**
• **Takahashi, Hiroyuki**
**Toyota-shi, Aichi 471-8571 (JP)**

(74) Representative: **Kramer - Barske - Schmidtchen**
**European Patent Attorneys**
**Patenta**
**Radeckestrasse 43**
**81245 München (DE)**

(56) References cited:
**EP-A- 0 940 304** **US-A- 6 073 961**
**US-A- 6 164 688**

EP 1 228 930 B1

## Description

The present application is based on Japanese Patent Applications No. 2001-23235, 2001-125946, 2001-132049, 2001-140323 and 2001-146242.

BACKGROUND OF THE INVENTION

1. Field of the Invention

The present invention relates to a head protection air bag system and more particularly to a head protection air bag system having an air bag body stored in a side portion of a passenger compartment which is adapted to inflate and deploy in longitudinal directions of a vehicle body in a curtain-like fashion. Further, the present invention relates to an air bag comprising an air bag main body having a plurality of inflating portions adapted to inflate when an inflating gas is allowed to flow thereinto and an inner tube disposed within the air bag main body for guiding the inflating gas into the respective inflating portions.

2. Description of the Related Art

Conventionally, as a head protection air bag system having an air bag body stored in a side portion of a passenger compartment which is adapted to inflate and deploy in longitudinal directions of a vehicle body in a curtain-like fashion there exists an air bag system in which an air bag body of a large volume is inflated by a single inflator. In such an air bag system, a gas distribution means having gas exit ports (supply ports) corresponding to respective inflation chambers of the air bag body is provided longitudinally within a gas passage in the air bag body in order to reduce the deployment time of the air bag body. There have been proposed under Unexamined Japanese Patent Publication No. Hei. 11-301394 a head protection air bag system in which the gas distribution means is constituted by a metallic pipe and under Unexamined Japanese Patent Publication No. 2000-127886 a head protection air bag system in which the gas distribution means is constituted by a fabric inner tube.

In these head protection air bag systems, it is preferable to make the amount of gas released from the respective gas exit ports as uniform as possible in order to ensure quick and secure inflation and deployment of the air bag bodies. To meet this requirement, in, for example, Unexamined Japanese Patent Publication No. Hei. 10-100840, the opening areas (the diameters) of gas exit ports which are considered to provide lower gas pressures are designed to get wider as their positions are located farther from the gas releasing port of the inflator.

However, in the gas distribution means disposed within the gas passage in the air bag body, in the event that a distal end portion of the gas distribution means or an end portion thereof which exists at a farthest position from the gas releasing port of the inflator is open, when the air bag body inflates and deploys, a part of the air bag body which confronts the distal end portion of the gas distribution means would be seriously damaged.

In contrast, another conventional head protection air bag system comprises an air bag main body folded up for storage on an upper edge side of a circumferential edge of an opening in a door on the inside of a vehicle in such a manner as to be allowed to deploy and inflate so as to cover the opening on the inside of the vehicle when the inflating gas is allowed to flow thereinto and an inner tube disposed within the air bag main body for guiding the inflating gas from an inflator into the air bag main body (refer to Unexamined Japanese Patent Publication No. Hei. 11-235965, in particular, to Figs. 9, 10).

The air bag main body comprises a gas-flowable portion adapted to inflate in such a manner as to separate an inside wall portion from an outside wall portion by allowing the inflating gas to flow thereinto and a non-gas-flowable portion into which no inflating gas is allowed to flow, and the gas-flowable portion comprises a plurality of inflating portions which are partitioned by the non-gas-flowable portion in such a manner as to be arranged in parallel in the axial direction of the inner tube and are made to open on the inner tube side thereof.

Then, the inner tube is disposed within the air bag main body with supply ports being made to open for supplying an inflating gas into the respective inflating portions. In addition, the inner tube is disposed for supplying the inflating gas quickly to the specific inflating chamber/s or inflating the respective inflating chambers uniformly without calling for a damage to the air bag main body with the inflating gas which is originally of high temperature and high pressure.

US 6,164,688 which forms the preamble of claims 1 and 2 discloses a side airbag apparatus comprising a gas generator, a gas filler tube tightly connected to the gas generator and provided with gas outflow openings at predetermined distances. Further, the gas tube is connected to an inflatable gas bag.

In the head protection air bag system like one described above, in order for the air bag to be deployed and inflated quickly, there has been a tendency to increase the output of the inflator for supplying the inflating gas to the air bag. Then, in a case where an inflator having an high output is used, even if the inner tube is disposed in the air bag main body, there has been a risk of gas leakage from near a boundary between a location of a non-gas-flowable portion disposed around the perimeter of an inflating portion in the vicinity of the inflator and the inflating portion.

Further, in the above head protection air bag system, it is desirable that the air bag main body is deployed and inflated quickly. In addition, in order for the air bag main body to be deployed and inflated quickly, the location of the supply ports of the inner tube becomes crucial when the air bag main body is folded up or in an initial stage of deployment and inflation of the air bag main body.

Still further, in the head protection air bag system, it is desirable that the respective inflating chambers deploy and inflate uniformly. Then, in order for the respective inflating portions to be allowed to deploy and inflate uniformly it is preferable in an early stage of inflation that the inner tube inflates in such a manner that the internal pressure therein becomes substantially uniform by allowing the inflating gas to flow thereinto and that the inflating gas so allowed to flow in is then allowed to be supplied into the respective inflating portions in such a manner that the deployment time of each inflating portion becomes substantially equal, and in order for the inner tube to inflate in such a manner that the internal pressure therein becomes uniform and for the inflating gas to be supplied into the inflating portions from the respective supply ports, the size of the supply ports in the inner tube becomes important.

SUMMARY OF THE INVENTION

An object of the present invention is to provide a head protection air bag system and an air bag which can ensure quick and secure deployment and inflation of the air bag body. This object is solved by a head protection air bag comprising the features of claim 1 or claim 2. Preferred embodiments are defined by the dependent claims.

There is provided a first head protection air bag system comprising an inflator disposed at the front, rear or in a central portion of an air bag body and a gas distribution means connected to the inflator, disposed within a gas passage of the air bag body and having a distal end portion which is closed, wherein an inflation gas from the inflator is supplied into inflation chambers of the air bag body via gas exit ports (supply ports) formed longitudinally in the gas distribution means at predetermined intervals, and the opening area of the gas exit port next to the distal end portion of the gas distribution means is made smaller than the opening area of any one of said gas exit ports located on the closer side to the inflator.

Consequently, when the inflator activates the inflation gas from the inflator is supplied into the inflation chambers of the air bag body via the gas exit ports (supply ports) of the gas distribution means, so that the air bag body deploys in a curtain-like fashion to thereby protect the head of the driver or a front-seat passenger and/or the head of a rear-seat passenger. As this occurs, while the internal pressure of the gas distribution means is increased in the vicinity of the closed distal end portion, since the opening area of the gas exist port next to the distal end portion of the gas distribution means is smaller than that of the gas exit port next thereto, the condition of gas released from the respective gas exit ports can be made substantially equal. As a result, by closing the distal end portion of the gas distribution means not only can the burst of the air bag body be prevented but also quick and secure deployment and inflation of the air bag body can be ensured.

There is provided a second head protection air bag system comprising an inflator disposed at the front, rear or in a central portion of an air bag body and a gas distribution means connected to the inflator, disposed within a gas passage of the air bag body and having a distal end portion which is closed, wherein an inflation gas from the inflator is supplied into inflation chambers of the air bag body via gas exit ports (supply ports) formed longitudinally in the gas distribution means at predetermined intervals, and the opening area of at least one of the gas exit ports of the gas distribution means is wider than the opening areas of at least one of the gas exit ports which are located nearer to the gas releasing port of the inflator and at least one of the gas exit ports which are located nearer to the distal end portion of the gas distribution means.

Consequently, when the inflator activates the inflation gas from the inflator is supplied into the inflation chambers of the air bag body via the gas exit ports (supply ports) of the gas distribution means, so that the air bag body deploys in a curtain-like fashion to thereby protect the head of the driver or a front-seat passenger and/or the head of a rear-seat passenger. As this occurs, while the internal pressure of the gas distribution means is increased in the vicinity of the closed distal end portion, since the opening area of at least one of the gas exit ports of the gas distribution means is wider than the opening areas of at least one of the gas exit ports which are located towards the gas releasing port of the inflator and at least one of the gas exit ports which are located towards the distal end portion of the gas distribution means, the condition of gas released from the respective gas exit ports can be made substantially equal. As a result, by closing the distal end portion of the gas distribution means not only can the burst of the air bag body be prevented but also quick and secure deployment and inflation of the air bag body can be ensured.

In the first head protection air bag system, the configuration of the closed distal end portion of the gas distribution means may be formed into a downwardly oriented curved or tapered configuration so that the flow of gas within the gas distribution means is directed towards the gas exit port located at the distal end of the gas distribution means.

Consequently, the flow of gas within the gas distribution means is disturbed by gas rebounded from the distal end portion at the closed distal end portion of the gas distribution means, and the condition of gas released from the distal end gas exit port tends to be dispersed. However, the disturbance to the flow of gas can be suppressed by forming the closed distal end of the gas distribution means into the downwardly oriented curved or tapered configuration so that the flow of gas within the gas distribution means is directed towards the gas exit port at the distal end, whereby gas flows smoothly towards the gas exit port at the distal end of the gas distribution means. As a result, the dispersion in volume of gas released from the respective gas exit ports can be kept small to thereby reduce the deployment time of the air bag body. deployment and inflation of the air bag body can be ensured.

Further, there is provided an air bag for a head protecting air bag system comprising: an air bag main body which can deploy in such a manner as to cover an opening on the inside a vehicle when an inflating gas flows into the air bag main body, and an inner tube disposed within the air bag main body for guiding an inflating gas from an inflator into the air bag main body, the air bag main body comprising a gas-flowable portion which can inflate in such a manner as to separate an inside wall portion from an outside wall portion when the inflating gas flows into the gas-flowable portion and a non-gas-flowable portion into which no inflating gas is allowed to flow, the gas-flowable portion comprising a plurality of inflating portions which are arranged in parallel with each other along an axial direction of the inner tube while being partitioned by the non-gas-flowable portion and which each have an inlet port portion made to open towards the inner tube, the inner tube being provided with supply ports which are disposed in such a manner as to confront the respective inlet port portions and are made to open narrower than the opening widthwise dimension of the inlet port portions so that the inflating gas is allowed to flow into the respective inflating portions, and at least the supply port of the inner tube which is disposed in the vicinity of the inflator is disposed to be offset closer to the inflator than a widthwise center of the inlet port portion which communicates with the supply port.

In the air bag for a head protection air bag system according to the invention, at least the supply port of the inner tube which is disposed in the vicinity of the inflator is disposed to be offset closer to the inflator than the widthwise center of the inlet port portion which communicates with the supply port. Namely, a distance between the supply port located in the vicinity of the inflator and the non-gas-flowable portion on a side of the perimeter of the inlet port portion of the inflating portion which communicates with the supply port which side is far away from the inflator. Owing to this, the pressure of the inflating gas exerted to the location of this non-gas-flowable portion can be suppressed to as low a pressure as possible, thereby making it possible to prevent a gas leakage from near the boundary between the non-gas-flowable portion and the inflating portion.

Consequently, in the air bag for a head protection air bag system according to the invention, even if an inflator having an improved output is used, a leakage from the air bag can be prevented.

There is provided a head protection air bag system comprising an air bag which is folded up to be stored on an upper edge side of an opening on the inside of a vehicle in such a manner as to deploy and inflate to cover the opening when an inflating gas is allowed to flow thereinto, the air bag comprising an air bag main body adapted to deploy and inflate to cover the opening on the inside of the vehicle when an inflating gas is allowed to flow thereinto and an inner tube disposed along an upper edge side in the air bag main body for guiding an inflating gas from an inflator into the air bag main body, the inner tube being constructed to have supply ports formed on a lower side of a circumferential wall thereof for supplying an inflating gas into the air bag main body, the air bag main body being folded up together with the inner tube disposed therein vertically in such a manner as to overlap from a state in which an outside wall portion and an inside wall portion thereof overlap each other for storage on an upper edge side of the opening, the head protection air bag system being characterized in that the supply ports formed in the inner tube are disposed in such a manner as to open downwardly at a substantially central portion in a transverse direction of the air bag main body so folded up when the air bag main body has completely been folded up.

In addition, the supply ports of the inner tube may be disposed in such a manner as to open downwardly without extending across folds of the air bag main body when the air bag main body has completely been folded up.

Furthermore, the supply ports of the inner tube may be disposed on a lower end side of the inner tube so folded and at a substantially central portion in the transverse direction of the air bag main body so folded up when the air bag main body has completely been folded up.

Moreover, the air bag main body may be folded up in such a manner that the supply ports of the inner tube open substantially centrally in the transverse direction of the air bag main body so folded up on a side where the folds of the air bag main body have not yet been unfolded when the inner tube has inflated substantially completely after an inflating gas has been allowed to flow into the air bag.

In this head protection air bag system, when the inflating gas is discharged from the inflator, firstly, the inflating gas is allowed to flow into the inner tube, whereby the inflation of the inner tube is substantially completed. Thereafter, the inflating gas flows into the air bag main body from the supply ports of the inner tube. Then, when the inflation of the inner tube is substantially completed, the supply ports are disposed in such a manner as to open downwardly at the substantially central portion in the transverse direction of the air bag main body so folded up. Owing to this, the inflating gas eventually flows into the air bag main body from the supply ports while downwardly pushing the portions of the air bag main body where the folds have not yet been unfolded along the folding direction. As a result, the air bag main body smoothly projects downwardly along the folding direction of the air bag main body while unfolding the folds at the portions where the folds have not yet been unfolded without largely deflecting towards the inside or outside of the vehicle, whereby the deployment and inflation of the air bag main body can be completed.

Consequently, the air bag main body having the inner tube disposed therein is allowed to deploy and inflate quickly.

Further, when the inflating gas is discharged from the inflator, firstly, the inflating gas is allowed to flow into the inner tube, whereby the inflation of the inner tube is substantially completed. Thereafter, the inflating gas flows into the air bag main body from the supply ports of the inner tube. Then, when the inflation of the inner tube is substantially completed, the supply ports are disposed in such a manner as to open downwardly without striding across the folds of the air bag main body. Owing to this, the inflating gas eventually flows into the air bag main body from the supply ports while downwardly pushing the portions of the air bag main body where the folds have not yet been unfolded along the folding direction.

As this occurs, if the supply ports of the inner tube were disposed in such a manner as to stride across the folds of the air bag main body which is in a folded-up state, the air bag main body would largely deflect towards the folds on the side where the supply ports are disposed or towards the outside or inside of the vehicle in the initial stage of deployment and inflation of the air bag main body. Owing to this, the air bag main body interferes with members existing on the perimeter thereof unnecessarily, leading to a case where the air bag main body is not allowed to deploy and inflate quickly.

However, with the head protection air bag system according to the invention, since the supply ports of the inner tube are disposed such that they do not stride across the folds of the air bag main body and open downwardly, the inflating gas eventually flows into the air bag main body from the supply ports while downwardly pushing the portions of the air bag main body where the folds of the air bag main body have not yet been unfolded in the folding direction. As a result, the air bag main body smoothly projects downwardly along the folding direction of the air bag main body while unfolding the folds at the portions where the folds have not yet been unfolded without largely deflecting towards the inside or outside of the vehicle, whereby the deployment and inflation of the air bag main body can be completed.

Consequently, the air bag main body having the inner tube disposed therein is allowed to deploy and inflate quickly.

Furthermore, in the head protection air bag system of the invention, when the inflating gas is discharged from the inflator, firstly, the inflating gas is allowed to flow into the inner tube, whereby the inflation of the inner tube is substantially completed. Thereafter, the inflating gas flows into the air bag main body from the supply ports of the inner tube. Then, since the supply ports of the inner tube are disposed on the distal end side in the folded state, when the inflation of the inner tube is substantially completed, the supply ports are disposed in such a manner as to open downwardly at the substantially central portion in the transverse direction of the air bag main body so folded up. Owing to this, the inflating gas eventually flows into the air bag main body from the supply ports while downwardly pushing the portions of the air bag main body where the folds have not yet been unfolded along the folding direction. As a result, the air bag main body smoothly projects downwardly along the folding direction of the air bag main body while unfolding the folds at the portions where the folds have not yet been unfolded without largely deflecting towards the inside or outside of the vehicle, whereby the deployment and inflation of the air bag main body can be completed.

Consequently, the air bag main body having the inner tube disposed therein is allowed to deploy and inflate quickly.

Moreover, when the inflating gas is discharged from the inflator, firstly, the inflating gas is allowed to flow into the inner tube, whereby the inflation of the inner tube is substantially completed. Thereafter, the inflating gas flows into the air bag main body from the supply ports of the inner tube. Then, when the inflation of the inner tube is substantially completed, the supply ports are disposed in such a manner as to open at the substantially central portion in the transverse direction of the air bag main body so folded up on the side of the air bag main body where the folds have not yet been unfolded. Owing to this, the inflating gas eventually flows into the air bag main body from the supply ports while downwardly pushing the portions of the air bag main body where the folds have not yet been unfolded along the folding direction. As a result, the air bag main body smoothly projects downwardly along the folding direction of the air bag main body while unfolding the folds at the portions where the folds have not yet been unfolded without largely deflecting towards the inside or outside of the vehicle, whereby the deployment and inflation of the air bag main body can be completed.

Consequently, the air bag main body having the inner tube disposed therein is allowed to deploy and inflate quickly.

There is provided an air bag for a head protection air bag system comprising an air bag main body adapted to deploy and inflate so as to cover an opening on the inside of a vehicle when an inflating gas is allowed to flow thereinto, and an inner tube disposed within the air bag main body for guiding an inflating gas from an inflator into the air bag main body, the air bag main body comprising a plurality of inflating portions arranged in parallel in an axial direction of the inner tube and each adapted to inflate when the inflating gas is allowed to flow thereinto in such a manner that an inside wall portion separates from an outside wall portion, the inner tube comprising a plurality of supply ports for supplying the inflating gas into the respective inflating portions, the air bag for a head protection air bag system being characterized in that the inside diametrical dimension of the inner tube is set to fall within a range of $\phi$25 to 60, the cross-sectional area of the inner tube when it has inflated is So and the lengthwise dimension L of the inner tube is set to fall within a range of 1500 to 3000mm, the total opening area s of the supply ports is set to fall within a range expressed by the following expression; $25 \times 10^{-3} \leqq So/L \cdot s \leqq 0.55 \times 10^{-3}$.

With the supply ports being set as is described above, the internal pressure inside the inner tube resulting when the inner tube is inflated by allowing the inflating gas to flow from the inflator into the inner tube can be made substantially uniform. Owing to this, after the inflation of the inner tube is completed, the amount of the inflating gas allowed to flow into the respective inflating portions from the supply ports can be made substantially constant, whereby the respective inflating portions are allowed to deploy and inflate in such a manner that the deployment time thereof becomes substantially uniform.

Consequently, in the air bag according to the invention, the air bag main body having the inner tube disposed therein is allowed to deploy and inflate in such a manner that the respective inflating portions inflate uniformly.

BRIEF DESCRIPTION OF THE DRAWINGS

In the accompanying drawings:

Fig. 1 shows a schematic front view as viewed from the inside of a vehicle showing a state in which a head protection air bag system according to an embodiment of the invention is used;
Fig. 2 shows a schematic enlarged sectional view taken along the line II-II in Fig 1;
Fig. 3 shows a partially sectional view showing a portion where an inflator according to the embodiment is disposed;
Fig. 4 shows a front view showing a state in which an air bag is deployed flat which is used in the embodiment;
Fig. 5 shows a partially enlarged sectional view showing a state in which an air bag according to the embodiment is inflated alone, which shows a state in which a portion indicated by the line V-V in Fig. 4 is inflated;
Fig. 6 shows a partially enlarged sectional view showing a state in which the air bag according to the embodiment is inflated alone, which shows a state in which a portion indicated by the line VI-VI in Fig. 4 is inflated;
Fig. 7 shows a partially enlarged sectional view showing a state in which the air bag according to the embodiment is inflated alone, which shows a state in which a portion indicated by the line VII-VII in Fig. 4 is inflated;
Fig. 8 shows a front view showing a state of the air bag according to the embodiment prior to the insertion of an inner tube;
Fig. 9 shows an enlarged sectional view of the inner tube according to the embodiment, showing a sectional view taken along the line IX-IX in Fig. 8;
Fig. 10 shows a partial deployment view of a sheet material constituting the inner tube according to the embodiment;
Fig. 11 shows a schematic enlarged view showing a state in which the air bag according to the embodiment is folded up;
Fig. 12 shows a schematic view showing a state in which the air bag of the air bag system according to the embodiment is deployed;
Fig. 13 shows a schematic view showing a state in which the air bag of the air bag system according to the embodiment is deployed, which shows a post-Fig. 12 state;
Fig. 14 shows an enlarged front view showing the vicinity of the upper side of the rear-seat gas-flowable portion in the air bag;
Fig. 15 shows an enlarged side view showing a distal end portion of the inner tube according to the embodiment of the invention;

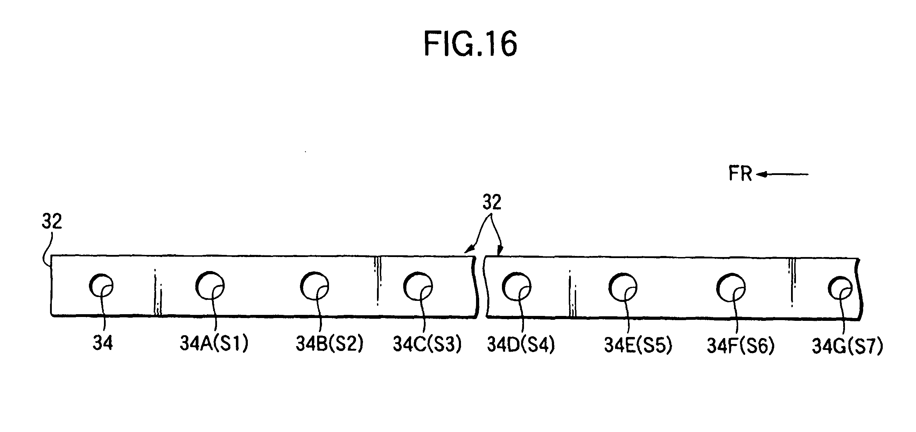

Fig. 16 shows an enlarged plan view showing gas exit ports in an inner tube of the head protection air bag system according to the embodiment of the invention;

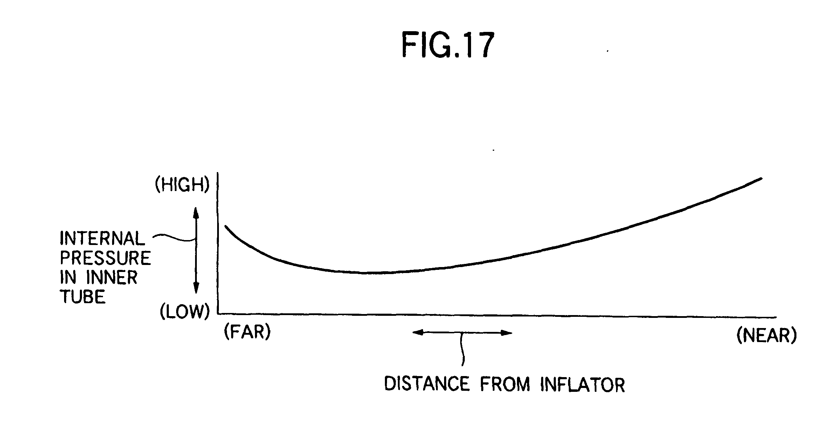

Fig. 17 shows a graph showing the internal pressure in the inner tube of the head protection air bag system according to the embodiment of the invention;
Fig. 18 shows an enlarged side view showing a distal end portion of an inner tube of a head protection air bag system according to a comparison example to the invention;
Fig. 19 shows a graph showing the internal pressure in the inner tube of the air bag;
Fig. 20 shows a front view showing a state in which an air bag according to the other embodiment of the invention is deployed flat;
Fig. 21 shows a partially enlarged sectional view showing a state in which the air bag shown in Fig. 20 is inflated alone, which shows a state in which a portion indicated by the line XV-XV in Fig. 20 is inflated;
Fig. 22 shows a partial deployment view of a sheet material constituting an inner tube of the air bag shown in Fig. 20;
Fig. 23 shows a schematic enlarged sectional view showing a state in which the air bag shown in Fig. 20 is folded up;
Fig. 24 shows a schematic view showing a state in which the air bag of an air bag system using the air bag shown in Fig. 20 is deployed;
Fig. 25 shows a schematic view showing a state in which the air bag of an air bag system using the air bag shown in Fig. 20 is deployed, which shows a post-Fig. 24 state;

Fig. 26 shows a side view showing an air bag of a head protection air bag system according to another second embodiment of the invention;

Fig. 27 shows a graph showing the internal pressure in an inner tube of the head protection air bag system according to another embodiment of the invention;

Fig. 28 shows an enlarged side view showing an end of an inner tube of the head protection air bag system according to another embodiment of the invention; and

Fig. 29 shows an enlarged side view showing an end of an inner tube of a head protection air bag system according to an example which is not part of the invention.

DETAILED DESCRIPTION OF THE PREFERRED EMBODIMENTS

Referring to the appended drawings, one embodiment of the invention will be described below.

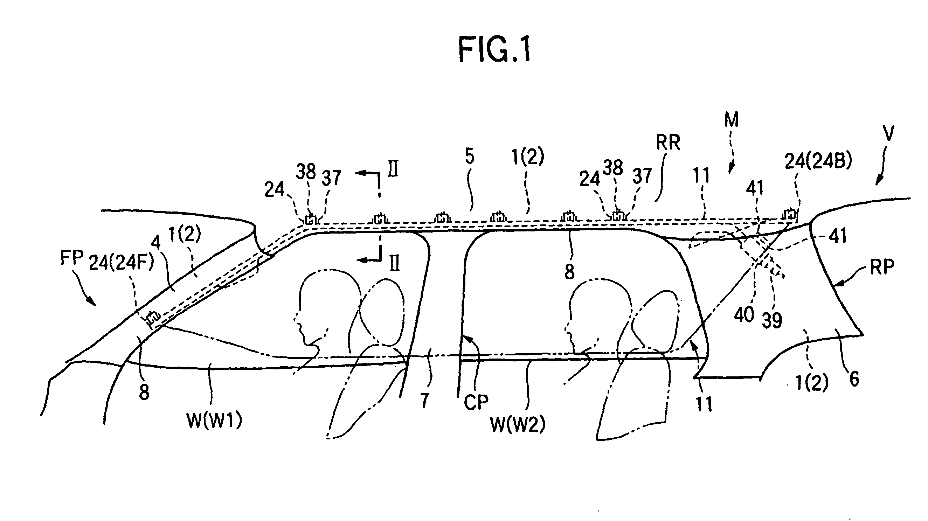

As shown in Fig. 1, in a head protection air bag system (hereinafter, referred to as an "air bag system") M according to the embodiment, an air bag 11 is folded up to be stored over a lower edge side of a front pillar portion FP, a lower edge side of a roof side rail portion RR and an upper side of a rear pillar portion RP of an upper edge circumferential edge of an opening W (W1, W2) in a door or window on the inside of a vehicle V.

This air bag system comprises the air bag 11, an inflator 39, mounting brackets 37, 40, and an air bag cover 8.

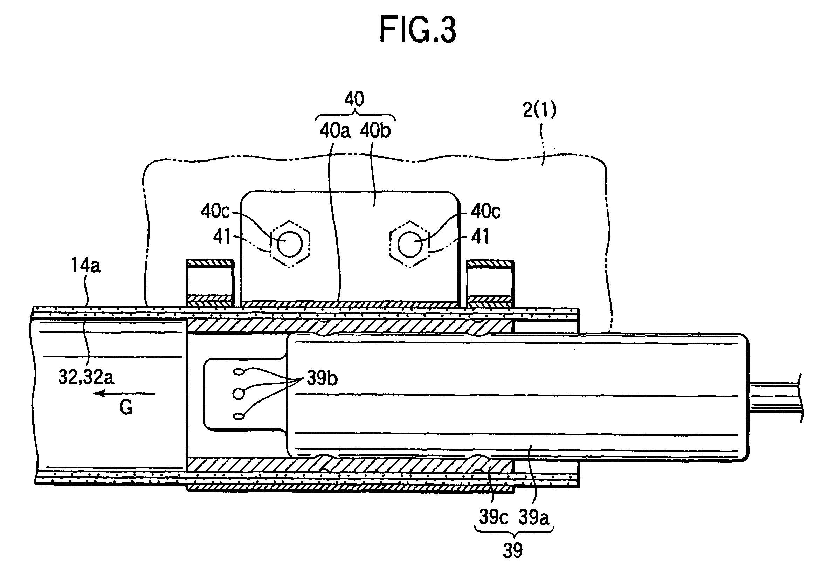

As shown in Fig 1, 3, the inflator 39 takes the form of a cylinder for supplying an inflating gas G into the folded air bag 11, and a connecting port portion 14a of the air bag 11, which will be described later and a rear end 32a of an inner tube 32 are fitted on the inflator. The inflator 39 according to the embodiment comprises a cylindrical main body portion 39a and a guiding cylindrical portion 39c for guiding the inflating gas G into the inner tube 32, and the guiding cylindrical portion 39c is crimped by reducing the inside diameter dimension partly to be fixed to the main body portion 39a by . The main body portion 39a has a plurality of gas discharge ports 39b disposed in a distal end portion thereof which is formed into a cylindrical shape having a small diameter for discharging the inflating gas G therethrough.

The mounting bracket 40 is formed of a sheet metal and comprises a cylindrical holding portion 40a for holding the inflator 39 on which the connecting port portion 14a of the air bag 11 and the rear end 32a of the inner tube 32 are fitted together with the connecting portion 14a and the inner tube rear end 32a from an outer circumferential side and a mounting portion 40b which is mounted to an inner panel 2 of a sheet metal on a body 1 side on the inside of a rear pillar portion RP using two mounting bolts 41. The holding portion 40a is crimped by reducing the inside diameter dimension to hold the inflator 39. Mounting holes 40c are formed in the mounting portion 40b so that the mounting bolts 41 are allowed to pass therethrough.

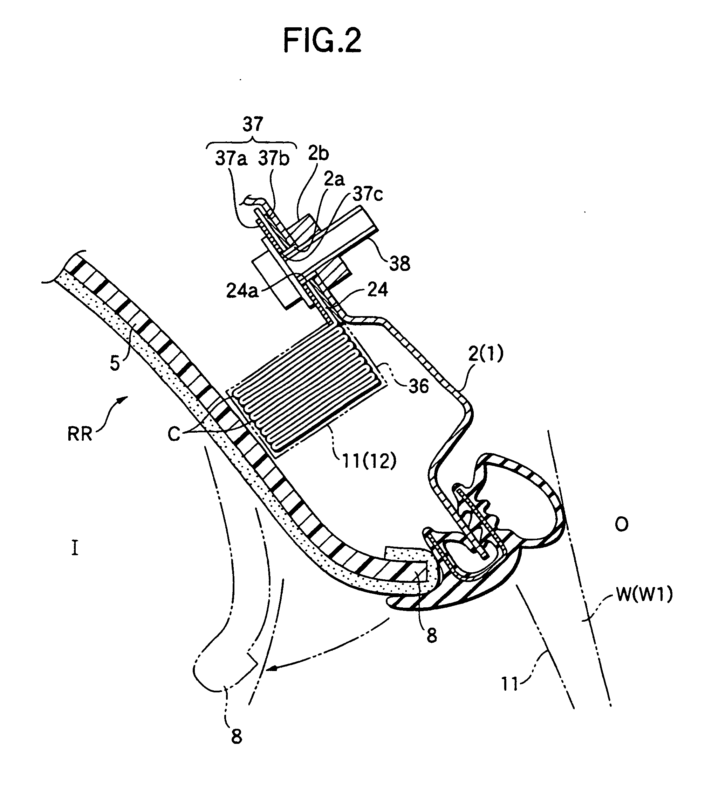

As shown in Figs. 1, 2, the mounting brackets 37 are each formed of a sheet metal and are designed to hold respective mounting portions 24 on the air bag 11, which will be described later. The mounting brackets 37 each comprise an inner plate 37a on the inside I of the vehicle and an outer plate 37b on the outside O of the vehicle. Amounting hole 37c corresponding to a mounting hole 24a in the mounting portion 24 is formed in the inner and outer plates 37a, 37b in such a manner as to penetrate therethrough. Then, a mounting bolt 38 is passed through the mounting holes 24a, 37c to be screwed into a nut 2b fixedly secured to the circumferential edge of the mounting hole 2a in the inner panel 2, whereby each mounting portion 24 is mounted to the inner panel 2.

As shown in Fig. 2, the inner panel 2 of the roof side rail portion RR to which a number of mounting brackets 37 are mounted covers the outside O of the folded air bag 11 in such a manner as to restrict the projection of the air bag 11 towards the outside O of the vehicle when the air bag 11 deploys and inflates and is disposed in an inclined fashion such that a lower end side of the inner panel 2 projects towards the outside O of the vehicle more than an upper side thereof, whereby the respective mounting portions 24 and the folded air bag 11 are stored along the inclination of the inner panel 2. In addition, the air bag 11 is stored to be disposed on the inside I of the vehicle more inwardly of an imaginary line extending downwardly from the mounting portion 24.

As shown in Figs. 1, 2, the air bag cover 8 is constituted by lower edge sides of a pillar garnish 4 disposed on the front pillar portion FP and a roof head lining 5 disposed on the roof side rail portion RR. Note that the front pillar garnish 4 and the roof head lining 5 are made from a synthetic resin and are fixedly mounted to the inner panel 2 of the body 1 on the inside of the vehicle at the front pillar portion FP and the roof side rail portion RR. In addition, the roof head lining 5 is disposed to extend from a vicinity to a position above the front pillar portion FP to a vicinity to a position above the rear pillar portion RR via above a center pillar portion CP.

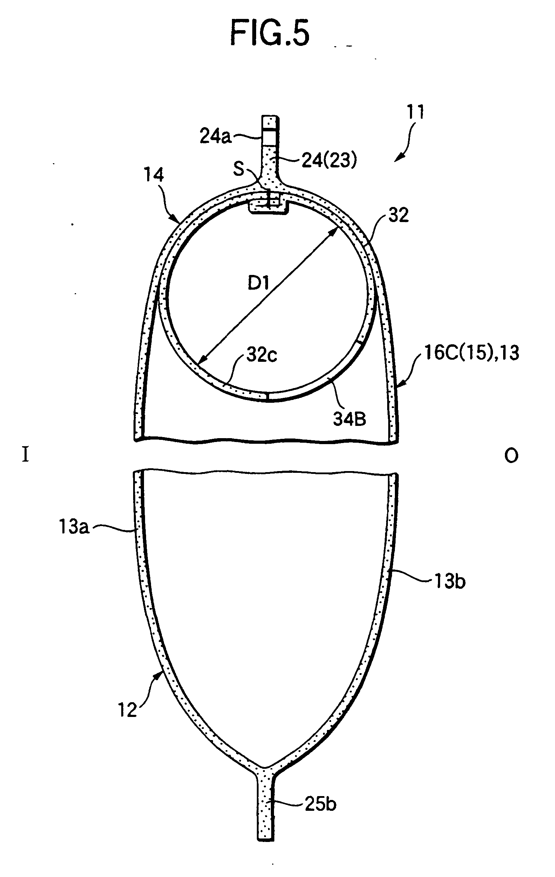

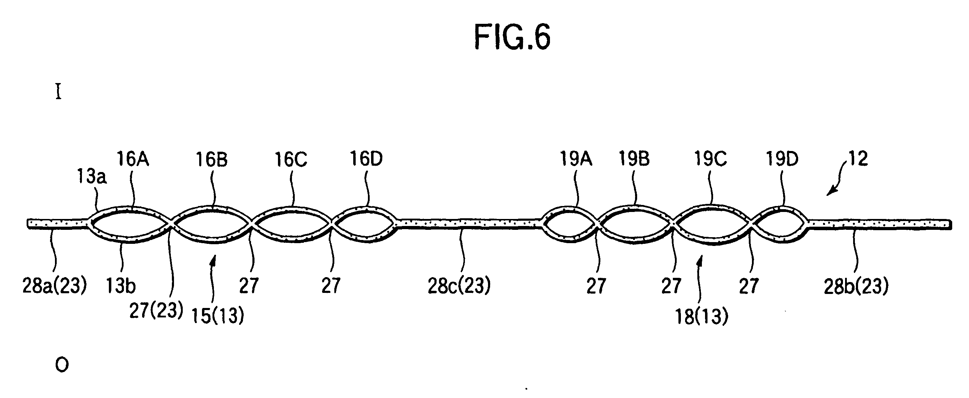

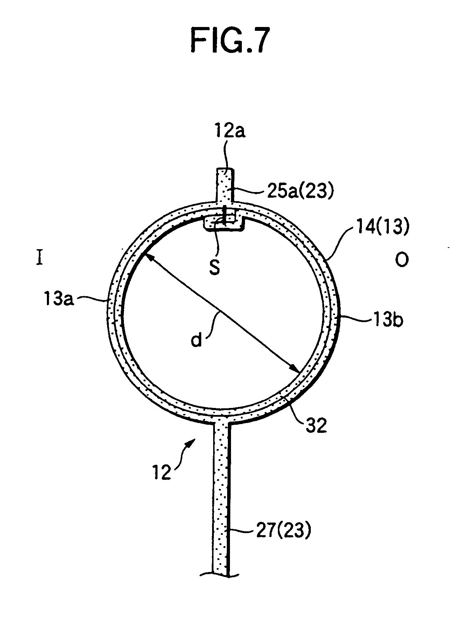

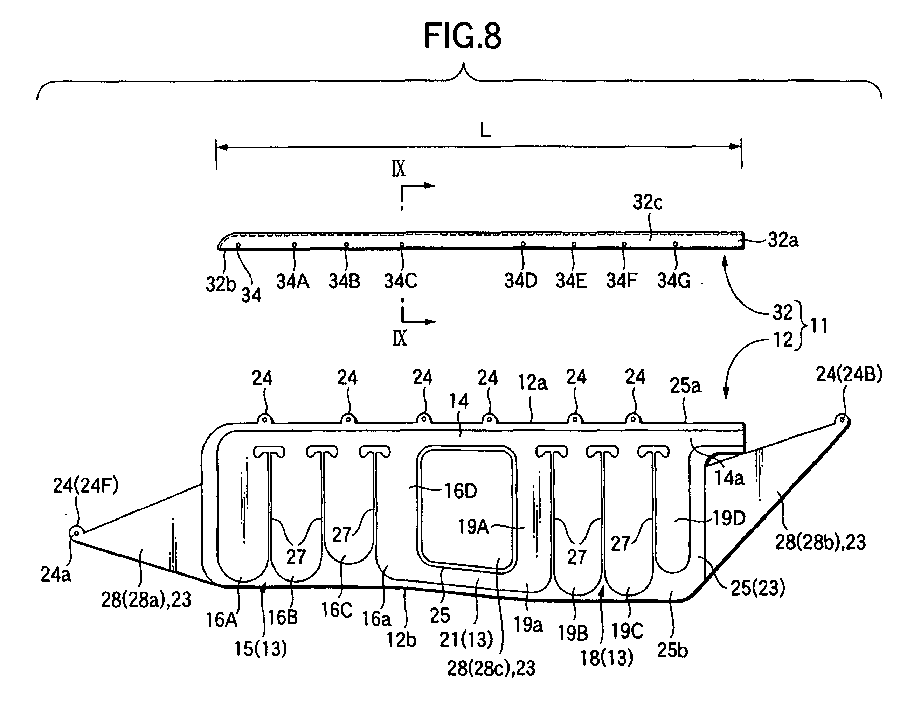

As shown in Figs. 1, 2, 4 to 8, the air bag 11 comprises an air bag main body 12 adapted to deploy and inflate so as to cover an opening W (W1, W2) on the inside I of the vehicle when an inflating gas G is allowed to flow thereinto and the inner tube 32 disposed along an upper edge side of the air bag main body 12 for guiding an inflating gas G from the inflator 39 into the air bag main body 12.

The air bag main body 12 is produced by weaving polyamide yarns into a bag and is, as shown in Figs.

1, 2, 4 to 8, constructed such that the air bag main body 12 deploys and inflates so as to cover the opening W (W1, W2) and the inside I of the pillar garnish of the center pillar portion CP by deploying from a folded-up state when the inflating gas G is allowed to flow from the inflator 39 into the air bag main body 12. In addition, the air bag main body 12 is folded up in a bellows-like fashion from a state in which an outside wall portion 13b and an inside wall portion 13a overlap each other in such a manner that a lower edge 12b side approaches an upper edge 12a side into an upper edge side of the circumferential edge of the opening W (W1, W2) for storage thereat. Furthermore, the air bag main body 12 comprises a gas-flowable portion 13 into which the inflating gas G is allowed to flow to thereby separate the inside wall portion 13a from the outside wall portion 13b and a non-gas-flowable portion 23 into which no inflating gas is allowed to flow.

In this embodiment, the gas-flowable portion 13 is constituted by a tube disposing portion 14, a front-seat gas-flowable portion 15, a rear-seat gas-flowable portion 18, and a communicating gas-flowable portion 21. The tube disposing portion 14 is disposed linearly along the longitudinal direction of the vehicle V on the upper edge 12a side of the air bag main body 12, and the inner tube 32 is disposed in the interior of the tube disposing portion 14. The front-seat gas-flowable portion 15 is disposed below a front side of the tube disposing portion 14 and is disposed to be on the side of the front seat of the vehicle V when the air bag 11 deploys and inflates, whereby the front-seat gas-flowable portion 15 inflates to cover the opening W1 existing on the side of the front seat. The rear-seat gas-flowable portion 18 is disposed below a rear side of the tube disposing portion 14 and is disposed to be on the side of the rear seat of the vehicle V when the air bag 11 deploys and inflates, whereby the rear-seat gas-flowable portion 18 inflates to cover the opening W2 existing on the side of the rear seat. The communicating gas-flowable portion 21 is disposed on the lower edge 12 side of the air bag main body 12 on a lower side of a plate-like portion 28, which will be described later, in the longitudinal direction along the lower edge 12b in such a manner as to provide a communication between a rear end lower portion of the front-seat gas-flowable portion 15 and a front end lower portion of the rear-seat gas-flowable portion 18.

The tube disposing portion 14 comprises the connecting port portion 14a at a rear end thereof. The connecting port portion 14a is made to open at the rear end and is formed substantially into a cylindrical configuration in such a manner as to project from the air bag main body 12. The tube disposing portion 14 extends linearly towards the front from the connecting port portion 14a to be disposed above the front-seat gas-flowable portion 15. In addition, the connecting port portion 14a is, as has been described above, constructed to fit on the inflator 39 with an inner tube rear end 32a being interposed therebetween.

The front-seat and rear-seat gas-flowable portions 15, 18 are each partitioned with partition joining portions 27, which will be described later and are constituted by a plurality of inflating portions 16, 19 disposed in the longitudinal direction of the vehicle, respectively, while the plurality of inflating portions extend vertically. The inflating portion 16 of the front-seat gas-flowable portion 16 is constituted by four inflating portions 16A, 16B, 16C, 16D. Then, the inflating portion 16D disposed at the rear end connects to a front edge side of the plate-like portion 28, which will be described later, whereby a lower end 16a is made to communicate with a front end of the communicating gas-flowable portion 21. The respective inflating portions 16A, 16B, 16C other than the inflating portion 16D are all closed at lower end sides thereof by a lower edge side portion 25b of a circumferential edge joining portion 25, which will be described later, of the non-gas-gas-flowable portion 23 whereas upper ends of all the inflating portions 16A, 16B, 16C, 16D are made to communicate with the tube disposing portion 14.

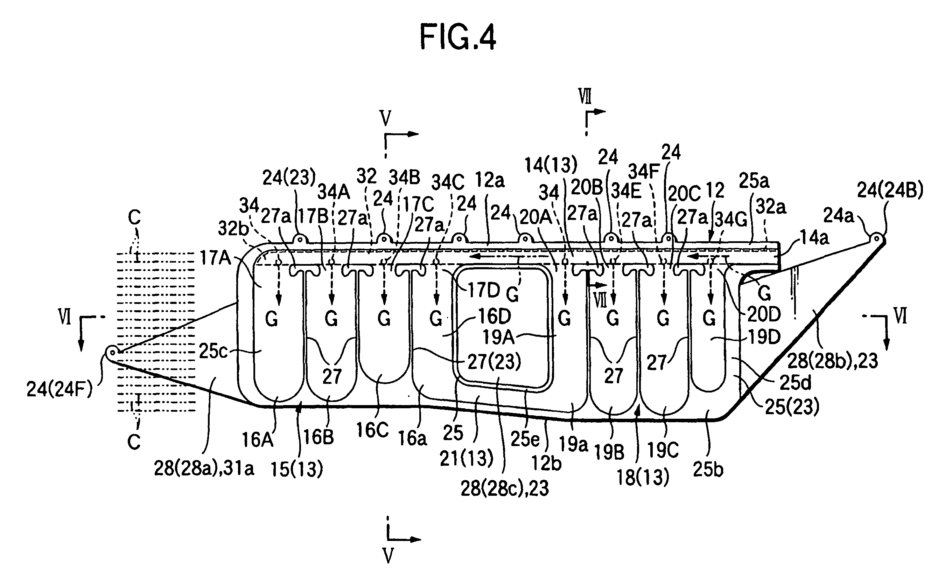

As shown in Fig. 4, inlet port portions 17A, 17B, 17C, 17D which are made to communicate with a tube disposing portion 14 are formed at upper ends of the four inflating portions 16A, 16B, 16c, 16D, respectively.

The inlet port portion 17A is formed between a front edge side portion 25c of the circumferential edge joining portion 25, which will be described later, of the non-gas-flowable portion 23 and an upper end 27a of the partition joining portion 27. The inlet port portions 17B, 17C are formed between upper ends 27a, 27b of partition joining portions 27, 27 which are disposed longitudinally. The inlet port portion 17D is formed between an upper end 27a of a partition joining portion and a circumferential edge joining portion 25e of a rectangular plate-like portion 28c, which will be described later.

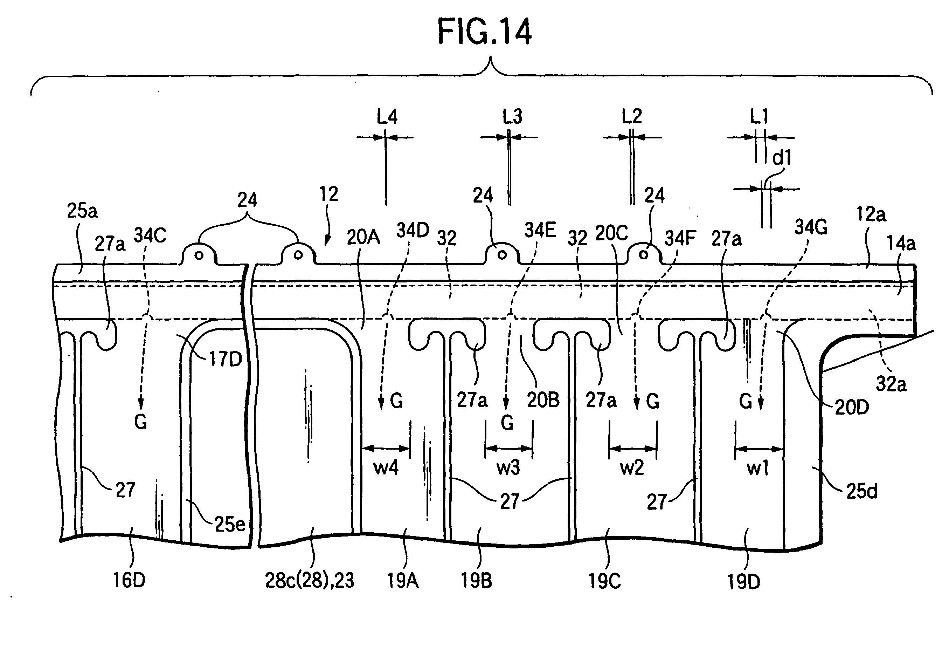

As shown in Figs. 4 and 14, the inflating portion 19 of the rear-seat gas-flowable portion 18 is constituted by four inflating portion 19A, 19B, 19C, 19D. Then, the inflating portion 19A disposed at a front end side is made to communicate with a rear end of the communicating gas-flowable portion 21 at a lower end 19a. The respective inflating portions 19B, 19C, 19D other than the inflating portion 19A are all closed at lower ends thereof by the lower edge side portion 25 of the circumferential edge joining portion 25. In addition, upper ends of all the inflating portions 19A, 19B, 19C, 19D are made to communicate with the tube disposing portion 14.

Then, formed, respectively, at upper ends of the respective inflating portions 19A, 19B, 19C, 19D are inlet port portions 20A, 20B, 20C, 20D which are made to communicate with the tube disposing portion 14.

The inlet port portion 20A is formed between a circumferential edge joining portion 25e disposed around the perimeter of the rectangular plate-like portion 28c. The inlet port portions 20B, 20C are formed, respectively, between upper ends 27a, 27a of partition joining portions 27, 27 which are disposed longitudinally.

The inlet port portion 20D is formed between an upper end 27a of a partition joining portion 27 and a rear edge side portion 25d of the circumferential edge joining portion 25.

The non-gas-flowable portion 23 is constructed such that the inside wall portion 13a and the outside wall portion 13b join together and is constituted by the mounting portions 24, the circumferential edge joining portion 25, partition joining portions 27 and plate-like portion 28.

The circumferential edge joining portion 25 is disposed at locations where it contacts the gas-flowable portion 13 around the perimeter of the gas-flowable portion 13 including the perimeter of a rectangular plate-like portion 28c, which will be described later, and is woven tightly so that there is occurring no leakage of gas.

A plurality (in this embodiment, eight) of mounting portions 24 are disposed in such a manner as to project upwardly from an upper edge side portion 25a of the circumferential edge joining portion 25 and the plate-like portion 28 (triangular plate-like portion 28a, 28b) on the upper edge 12a side of the air bag main body 12, and the mounting brackets 37 for mounting to the inner panel 2 are fixedly secured to the mounting portions 24. The mounting portions 24 each have a mounting hole 24a formed therein so that the mounting bolt 38 passes therethrough.

The plate-like portion 28 is constituted by triangular plate-like portions 28a, 28b which are disposed at the front end side and rear end side of the air bag main body 12 and the rectangular plate-like portion 28c disposed between the tube disposing portion 14 and the communicating gas-flowable portion 21 which are disposed between the front-seat gas-flowable portion 15 and the rear-seat gas-flowable portion 18 which are disposed longitudinally. The plate-like portion 28 secures the overall configuration of the air bag main body 12 and reduces the volume of the gas-flowable portion 13 to thereby set short a time required until the inflation of the air bag main body 12 is completed. In addition, the front triangular plate-like portion 28a is disposed in such a manner as to project forwards from the front edge side of the circumferential edge joining portion 25, and the rear triangular plate-like portion 28b is disposed in such a manner as to project rearwards from the rear edge side of the circumferential edge joining portion 25. In addition, the circumferential edge joining portion 25 is disposed between the perimeter of the rectangular plate-like portion 28C and the gas-flowable portion 13 (front-seat and rear-seat gas-flowable portions 15, 18, communicating gas-flowable portion 21, tube disposing portion 14).

A plurality of partition joining portions 27 are provided in parallel with each other in the longitudinal direction of the vehicle V and each take the form of a substantially "T-shape" which extends upwardly from the lower edge side portion 25b of the circumferential edge joining portion 25 to the communicating gas-flowable portion 21 within the areas of the respective front-seat and rear-seat gas-flowable portions. The respective partition joining portions 27 partition the inside of the respective gas-flowable portions 15, 18 into a plurality of inflating portions 16A, 16B 16C, 16D, 19A, 19B, 19C, 19D, and the partition joining portions 27 are disposed to make the thickness of the respective gas-flowable portions 15, 18 substantially equal when the respective gas-flowable portions 15, 18 inflate by allowing the inflating gas G to flow thereinto. In addition, the respective partition joining portions 27 exert tensions in the longitudinal direction from a position in the vicinity of the connecting port portion 14a to the front portion of the air bag main body 12, or a mounting portion 24B at the rear end of the triangular portion 32b to a mounting portion 24F at the front end of the triangular plate-like portion 32a, so that the air bag main body 12 do not swing largely towards the inside I or outside O of the vehicle even if the air bag main body is subjected to a pushing force towards the inside I or outside O of the vehicle.

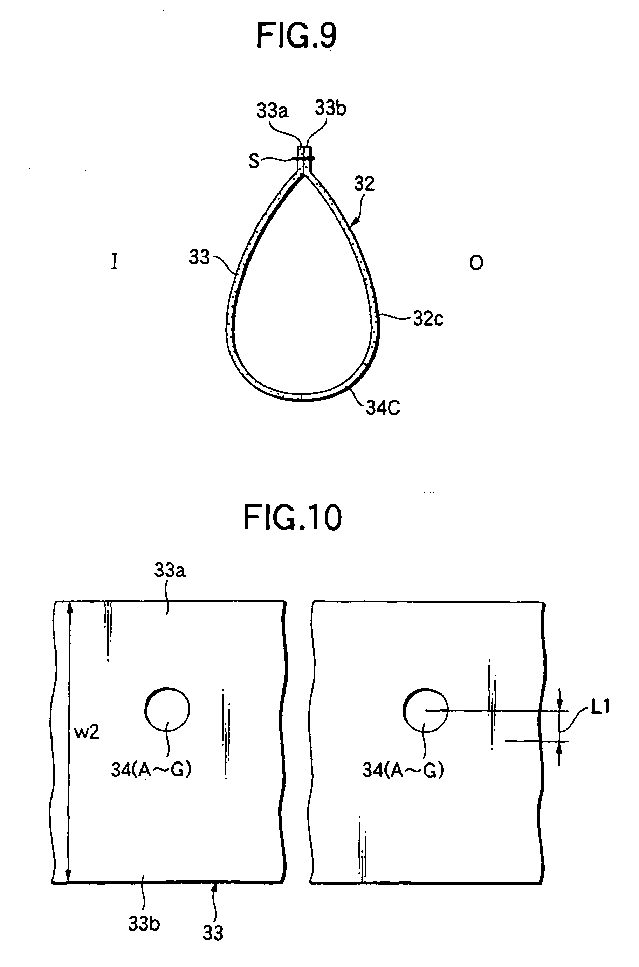

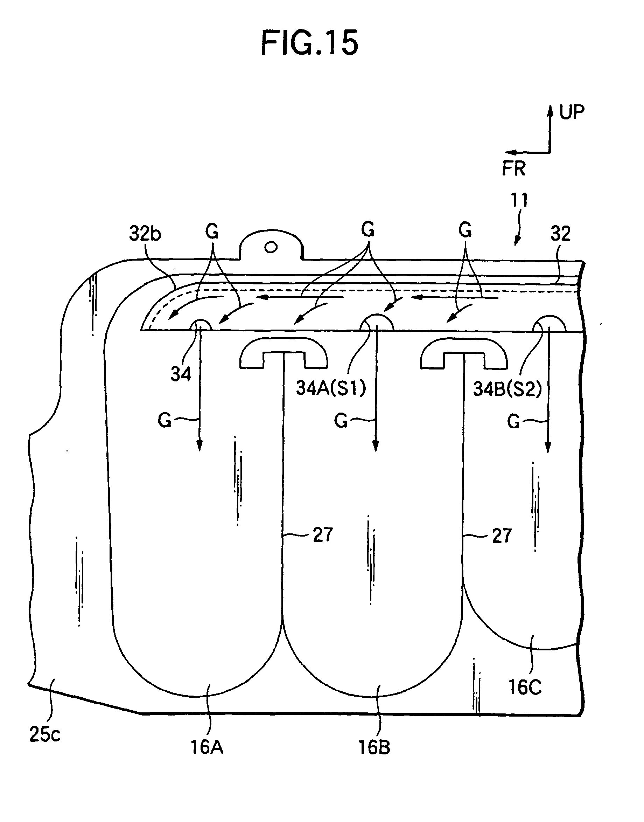

The inner tube 32 is formed into a cylinder and is inserted into the tube disposing portion 14 within the air bag main body 12 to be disposed therein. The rear end 32a of the inner tube 32 is thermally welded to an inner circumferential surface side of the connecting port portion 14a so as not to be deviated when it is fitted on the inflator 39. The inner tube 32 is formed of a piece of sheet material 33 (refer to Fig. 10) comprising a woven fabric produced using polyamide or polyester yarns and is formed into a cylindrical shape by suturing together edges 33a, 33b overlapped by folding the sheet material in half in the transverse direction with a polyamide suture. Note that a front end 32b of the inner tube 32 which is located far away from the connecting port portion 14a is formed into a downwardly oriented curbed configuration or an arc-like configuration as viewed from the side so that the flow of gas within the inner tube 32 (as indicated by arrows G) is directed towards a gas exit port (supply port) 34 formed at the distal end thereof as shown in Fig. 15.

In addition, the lengthwise dimension L of the inner tube 32 is set to fall within a range of 1500 to 3000mm, and the inside diametrical dimension d of the inner tube 32 resulting when it is inflated into a cylindrical shape is set to fall within a range of $\phi$25 to 60.

Then, as shown in Figs. 4, 5, 8, 9, a plurality of supply ports (gas exit ports) 34, 34A-34G are formed in the circumferential wall 32C of the inner tube 32 on a lower portion side for supplying a inflating gas G into the respective gas-flowable portions 15, 18 of the air bag main body 12. The respective supply ports are formed in the inner tube 32 to be made to open at positions located above the respective inflating portions 16A, 16B, 16C, 16D, 19A, 19B, 19C, 19D so that the inflating gas G can be supplied from the inner tube 32 into the respective inflating portions 16A, 16B, 16C, 16D, 19A, 19B, 19C, 19D.

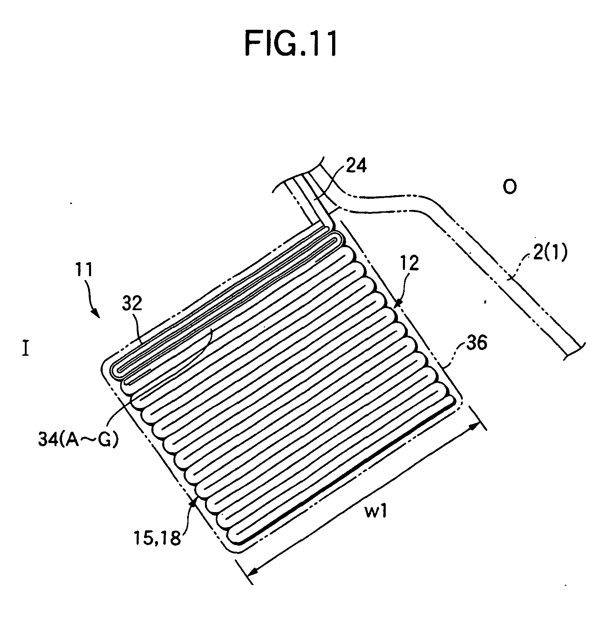

In addition, as shown in Figs. 4, 5, 8, 9, the respective supply ports 34, 34A-34G are formed such that centers thereof are positioned offset towards the edge portion 33a from the transverse center of the sheet material 33 so that the supply ports are disposed on the outside O of the vehicle body in the vicinity of the lower end of the inner tube (refer to Fig. 10). This is because as shown in Fig. 11, the supply ports are disposed in such a manner as to open downwardly at a substantially transversely central position in the folding direction of the air bag main body 12 when the air bag main body 12 has completely been folded up. In the embodiment, the folding width dimension w1 of the air bag main body 12 is 25mm, the widthwise dimensions w2 of the sheet material 33 is 114mm (the outside diameter D1 of the inner tube 32 is 1:36.2mm), and a distance L1 from the transverse center of the sheet material 33 to the center of the supply ports is set to be 12.5mm.

Further, as shown in Figs. 4, 8, 14, the supply ports 34D, 34E, 34F, 34G which are disposed above the rear-seat gas-flowable portion 18 are disposed in such a manner as to be offset closer to the inflator 39 side than the transverse centers of the respective inlet port portions 20A, 20B, 20C, 20D which communicate with the respective supply ports 34D, 34E, 34F, 34G. This offset amount is set largest for the supply port 34G which communicates with the inflating portion 19D which is located nearest to the inflator 39, and the offset amounts of the supply ports are set such that the offset amounts become smaller sequentially as the supply ports are located farther away from the inflator 39. In this embodiment, assuming that the widthwise dimension w1 of the inlet port portion 20D for the inflating portion 19 (a distance from the rear edge of the upper end 27a on the partition joining portion to the front edge of the rear edge side portion 25d of the circumferential edge joining portion 25) is set to 115mm, and that the inside diameter dimension d1 of the supply port 34G disposed above the inflating portion 19D is set to 19mm, a distance L1 (the offset amount) from the transverse center of the inlet port portion 20D to the center of the supply port 34G is set to 10mm. In addition, a distance L2, which is set as a widthwise dimension w2, from the transverse center of the inlet port portion 19C to the center of the supply port 34F is set smaller than the distance L1, a distance L3, which is set as a widthwise dimension w3, from the transverse center of the inlet port portion 19B to the center of the supply port 34E is set smaller than the distance L2, and a distance L4, which is set as a widthwise dimension w4, from the transverse center of the inlet port portion 19A to the center of the supply port portion 34D is set smaller than the distance L3.

In addition, in this embodiment, the supply ports 34, 34A-34C on the front-seat gas-flowable portion 15 are disposed at the transverse centers of the respective inlet port portions 17.

Then, the supply ports are set such that assuming that the cross-sectional area of the inner tube 32 resulting when it has inflated is So and the lengthwise dimension of the inner tube is L, the total opening area s of the supply ports 34, 34A, 34B, 34C, 34D, 34E, 34F, 34G is set to fall within a range expressed by the following expression;

$$0.25 \times 10^{-3} \leq So/L \cdot s \leq 0.55 \times 10^{-3}.$$

In the embodiment, to be more specific, the lengthwise dimension L of the inner tube 32 is set to be 1865mm, the inside diametrical dimension d resulting when the inner tube 32 is inflated into a cylindrical shape is $\phi40$, the inside diametrical dimension of the supply port 34 which is disposed at a front end side of the front-seat gas-flowable portion 15 and the supply port 34G which is disposed at a rear end side (a side in the vicinity of the inflator 39) of the rear-seat gas-flowable portion 18 are set to be $\phi11$, and the inside diametrical dimension of the remaining supply ports 34A, 34B, 34C, 34D, 34E, 34F are set to be $\phi16$. Namely, in the above expression, So=$400\pi$, s=$444.5\pi$, and So/L•S=$0.483 \times 10^{-3}$.

Next, the installation of the air bag system to the vehicle V will be described. Firstly, the inner tube 32 is inserted into the air bag main body 12. The inner tube 32 is inserted from the open side of the connecting port portion 14a into the tube disposing portion 14 of the air bag main body 12 using a predetermined fixture, and the rear end 32b side of the inner tube 32 is thermally welded to the tube disposing portion 14 in the vicinity of the connecting port portion 14a using high frequency welding. Next, the air bag main body 12 which is deployed flat is, as indicated by two-dot chain lines illustrated in Figs. 2 and 4, folded up together with the inner tube 32 in the bellows-like fashion in such a manner that the lower edge 12b side of the air bag main body 12 approaches the upper edge 12a thereof by sequentially forming folds externally and internally (refer to Figs. 2, 11). As this occurs, as is shown in Fig. 11, the supply ports 34 of the inner tube 32 are allowed to open downwardly at the substantial center in the transverse direction of the air bag main body 12 so folded up.

Then, after the folding of the air bag main body 12 is completed the air bag 11 is wrapped around with a breakable tape 36 (refer to Figs. 2, 11) which prevents the collapse of folds so formed at predetermined positions, and the inflator 39 and the mounting brackets 37, 40 are mounted to thereby form an air bag assembly.

Thereafter, the respective mounting brackets 37, 40 are disposed at predetermined positions on the inner panel 2 and are passed through the respective mounting holes 24a, 37c, 40c to be bolted down with the bolts 38, 41, whereby the respective mounting brackets 37, 40 are fixed to the inner panel 2, the air bag assembly being thereby mounted to the body 1. Next, a lead wire, not shown, which extends from a predetermined control device for the operation of the inflator is connected to the inflator 39, and the front pillar garnish 3 and the roof head lining 5 are mounted on the body 1. Furthermore, the rear pillar garnish 6 and the center pillar garnish 7 are then mounted on the body 1, whereby the air bag system M is eventually installed on the vehicle V.

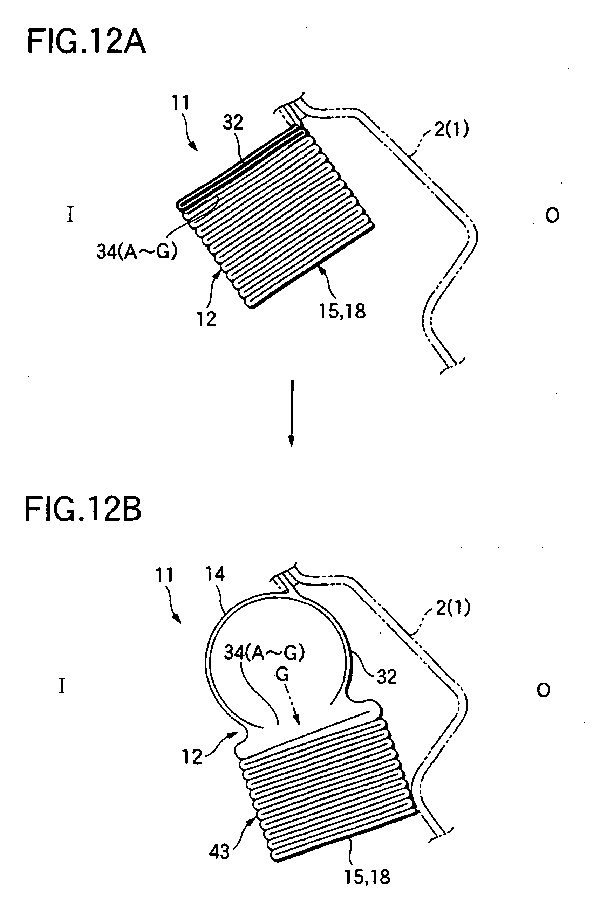

when the inflator 39 is actuated after the air bag system M has been installed in the vehicle V the inflating gas G from the inflator 39 flows, as indicated by two-dot chain lines illustrated in Fig. 4, to the front within the inner tube 32 disposed in the tube disposing portion 14, and the tape 36 wrapping the air bag 11 is broken as shown in Figs. 12A, 12B, whereby the inflation of the inner tube 36 is completed. Thereafter, the inflating gas G is supplied into the respective inflating portions 16A, 16B, 16C, 16D, 19A, 19B, 19C, 19D via the supply ports 34 and respective inlet port portions, and the respective gas-flowable portions 15, 18 of the air bag main body 12 start to inflate while the folds thereof are being unfolded. Furthermore, pushing through the air bag cover 8 on the lower edge side of the front pillar garnish 4 and the roof head lining 5, the air bag 11 projects downwardly, as indicated by two-dot chain lines illustrated in Figs. 1, 2, and deploys and inflates widely so as to cover the openings W1, W2, as well as the center pillar portions CP and the rear pillar portion RP on the inside I of the vehicle.

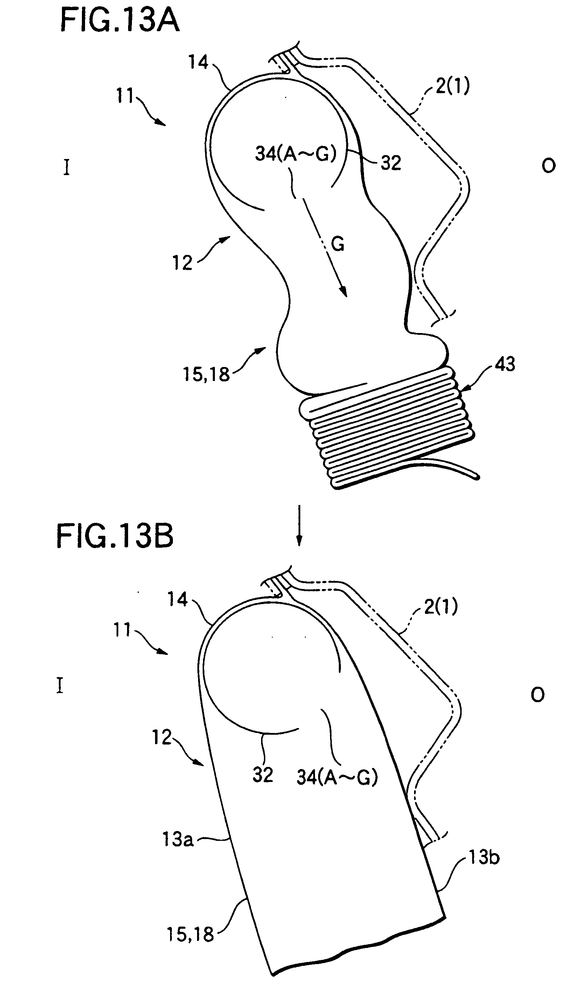

Then, in the air bag system according to the embodiment of the invention, the supply ports 34 are disposed in such a manner as to open downwardly (to the side of the air bag main body 12 where portion 43 exist in which the folds have not yet been unfolded) at the substantially transverse center of the air bag main body 12 which are folded up, as shown in Fig. 12B, when the inflation of the inner tube 32 has been completed. Owing to this, as shown in Fig. 13A, the inflating gas G eventually flows into the gas-flowable portions 15, 18 (the air bag main body 12) from the supply ports 34 while pushing the portions 43 of the air bag main body 12 where the folds have not yet been unfolded (portions of the gas-flowable portions 15, 18) downwardly in the folding direction. As a result, as shown in Fig. 13B, the air bag main body 12 projects smoothly downwardly along the folding direction of the air bag main body 12 while unfolding the folds of the portions 43 where the folds have not yet been unfolded (the portions of the gas-flowable portions 15, 18) without largely deflecting to the inside I or the outside O of the vehicle, whereby the deployment and inflation of the air bag is completed.

Consequently, in the air bag system according to the embodiment of the invention, the air bag main body 12 is allowed to deploy and inflate quickly which has the inner tube 32 disposed therein.

In addition, as to the supply ports 34 of the inner tube 32 when the air bag main body 12 has completely been folded up, in order for the supply ports 34 to be made to open downwardly at the substantially transverse center of the air bag main body 12 which are in the folded state, as in the case of this embodiment, considerations have to be given to the setting of the widthwise dimension w1 of the folded air bag main body 12, the outside diameter dimension D1 of the inner tube 32 and the location of the supply ports 34 in the circumferential direction of the inner tube 32.

In addition, in the inner tube 32 according to the embodiment of the invention, the supply ports 34 are disposed to be offset outwardly of the lower end center of the inner tube 32 to the outside O of the vehicle. Owing to this construction, when the air bag 11 deploys and inflates, the air bag main body 12 deploys and inflates along the inner panel 2, whereby the air bag main body 12 is allowed to deploy and inflate while the projection of the air bag main body 12 into the inside I of the vehicle can be suppressed as much as possible. Of course, if no consideration has to be given to this respect, the supply ports 34 may be disposed to be located at the lower end center of the inner tube 32 or a position in the vicinity of the lower end of the inner tube 32 on the inside I of the vehicle.

Furthermore, in this air bag system M, when the inflation of the inner tube 32 is substantially completed the supply ports 34 are disposed in such a manner as to open downwardly without striding across the folds C of the air bag main body 12. Owing to this, the inflating gas G eventually flows into the air bag main body 12 from the supply ports 34 while downwardly pushing the portions 43 of the air bag main body 12 where the folds have not yet been unfolded along the folding direction. As this occurs, if the supply ports 34 of the inner tube 32 were disposed in such a manner as to stride across the folds C of the air bag main body 12 which is in a folded-up state, the air bag main body 12 would largely deflect towards the folds C on the side where the supply ports 34 are disposed or towards the outside O or inside I of the vehicle in the initial stage of deployment and inflation of the air bag main body 12. Owing to this, the air bag main body 12 interferes with members existing on the perimeter thereof unnecessarily, leading to a case where the air bag main body 12 is not allowed to deploy and inflate quickly. However, with the head protection air bag system M according to the embodiment of the invention, since the supply ports 34 of the inner tube 32 are disposed such that they do not stride across the folds C of the air bag main body 12 and open downwardly, the inflating gas G eventually flows into the air bag main body 12 from the supply ports 34 while downwardly pushing the portions 43 of the air bag main body 12 where the folds of the air bag main body 12 have not yet been unfolded in the folding direction.

Even in this case, as to the supply ports 34 of the inner tube 32 when the air bag main body 12 has completely been folded up, in order for the supply ports 34 to be made to open downwardly without striding across the folds C of the air bag main body 12, considerations have to be given to the setting of the widthwise dimension w1 of the folded air bag main body 12, the outside diameter dimension D1 of the inner tube 32 and the location of the supply ports 34 in the circumferential direction of the inner tube 32.

In addition, in the event that the inside diameter dimension of the supply ports 34 is larger than the widthwise dimension w1 of the air bag main body 12 which is in the folded-up state, even if the center of the supply ports 34 is disposed at substantially transverse center of the folded air bag main body 12, portions of the supply ports 34 which are in the vicinity of the end portions thereof are disposed in such a manner as to stride across the folds C of the air bag main body 12. However, even if the portions of the supply ports 34 which are in the vicinity of the end portion thereof strides across the folds C of the air bag main body 12, since the center of the supply ports 34 is located at the substantially transverse center of the folded air bag main body 12, the inflating gas G supplied from the supply ports 34 flows into the air bag main body 12 while downwardly pushing the portions 43 of the air bag main body 12 where the folds have not yet been unfolded in the folding direction. Owing to this, in the event that the inside diameter of the supply ports 34 is large, if the center of the supply ports 34 is disposed at the substantially transverse center of the folded air bag main body in the folding direction, the portions of the supply ports 34 in the vicinity of the end portions thereof may stride across the folds 12 of the air bag main body 12.

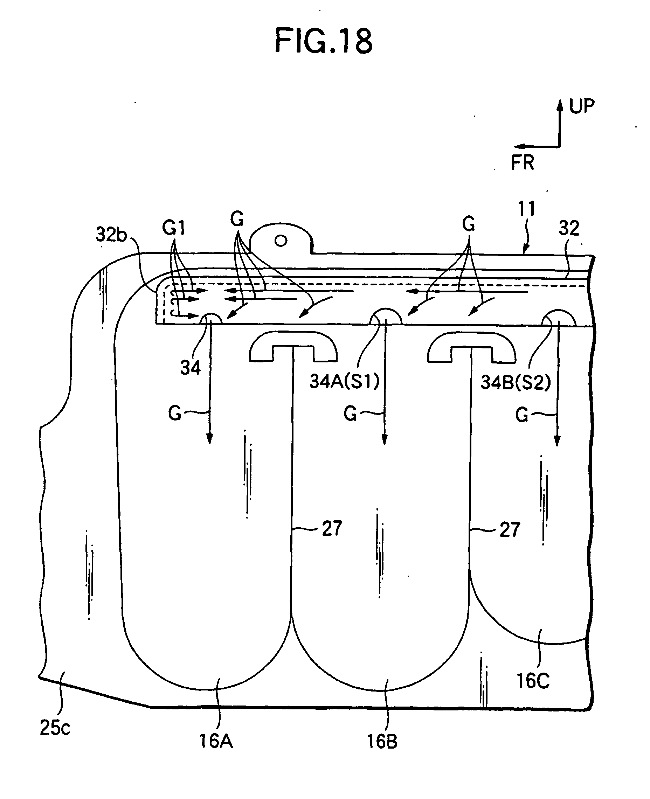

In addition, as is seen from a comparison example shown in Fig. 18, the flow of gas (arrows G) is disturbed by gas (arrows G1) rebounded from the front end 32b at the closed front end 32b of the inner tube 32, whereby the condition of gas released from the distal end gas exit port 34 tends to be dispersed. However, according to the embodiment, as shown in Fig. 15, the distal end configuration of the closed front end 32b of the inner tube 32 is formed into a downwardly facing curved configuration so that the flow of gas within the inner tube 32 is directed towards the gas exit port 34 at the distal end, whereby the disturbance to the flow of gas can be suppressed, thereby allowing gas to flow smoothly towards the distal end gas exit port 34. As a result, the dispersion in volume of gas released from the respective gas exit ports 34, 34A, 34B, 34C, 34D, 34E, 34F, 34G can be suppressed, thereby making it possible to reduce the deployment time of the air bag 11.

In addition, in this embodiment, while the distal end configuration of the closed front distal end portion 32B of the inner tube 32 is formed into the downwardly facing curved configuration, the distal end configuration of the closed front end 32b of the inner tube 32 may be formed into a downwardly facing tapered configuration so that the flow of gas within the inner tube 32 is directed towards the gas exit port 34 at the distal end.

Moreover, when the inflator 39 is actuated, since the flowing inflating gas G becomes highest in the inflating portion 19D which is disposed in the vicinity of the inflator 39, the pressure exerted on the upper end 27a of the partition joining portion 27 which is the gas-non-flowable portion 23 located on the side which is farthest from the inflator 39 becomes highest.

However, in the air bag 11 according to the embodiment, as shown in Fig. 14, the supply port 34G of the inner tube 32 disposed nearest to the inflator 39 is disposed in such a manner as to be offset largest past the center of the inlet port portion 20D towards the inflator 39 side. Namely, a distance between the supply port 34G in the vicinity of the inflator 39 and the upper end 27a of the partition joining portion 27 on the perimeter of the inlet port portion 20D for the inflating portion 19D which communicates with the supply port 34G on the far side from the inflator 39 can be made longer. Owing to this, the pressure of the inflating gas G acting on the upper end 27a of the partition joining portion 27 can be suppressed to as low a pressure as possible, whereby a gas leakage from the boundary between the upper end 27a of the partition joining portion 27 and the inflating portion 19 can be prevented.

Furthermore, according to the embodiment, since the supply ports 34D, 34E, 34F which communicate with the inflating portions 19A, 19B, 19C in the rear-seat gas-flowable portion 18 are also disposed to be offset towards the inflator side so that the offset amounts thereof become smaller sequentially as the supply ports are located farther away from the inflator 39, there is no risk of a gas leakage from the vicinity of the boundary between the upper end 27a of the partition joining portion 27 or the circumferential edge joining portion 25e and the inflating portions 19A, 19B, 19C even in the vicinity of the inflator 39 where the pressure of inflating gas G which flows in becomes high.

In addition, in the embodiment, while the centers of the supply ports 34D, 34E, 34F, 34G which communicate with the respective inflating portions 19A, 19B, 19C, 19D of the rear-seat gas-flowable portion 18 are offset towards the inflator side, the supply ports 34D, 34E, 34F, 34G whose centers are offset are not limited to those supply ports, but only the supply port 34G which communicates with the inflating portion 19D positioned nearest to the inflator 39 may be offset. In addition, in the embodiment, while the offset amounts of the respective supply ports 34D, 34E, 34F, 34G are set such that the offset amount of the supply port 34G disposed on the inflator 39 side is set largest and that the offset amounts become smaller sequentially as they are located farther away from the inflator 39, the offset amounts of the respective supply ports 34D, 34E, 34F, 34G may be set substantially equal to each other. Furthermore, the respective supply ports 34, 34A-34C on the front-seat gas-flowable portion 15 may be disposed so as to be offset from the transverse center of the inlet port portions 17 towards the inflator 39 side.

In addition, in the air bag according to the embodiment, while the connecting port portion is disposed on the rear end side, air bags to which the invention can be applied is not limited that particular air bag, but for example, the inflator may be disposed between the inlet port portions for the front seat and those for the rear seat. As this occurs, the inner tube is disposed in such a manner as to guide the inflating gas to the front-seat inlet port portions and the rear-seat inlet port portions, respectively. Then, the supply ports communicating with the inflating portions disposed on the rear side which comes in the vicinity of the inflator for the front-seat inlet port portions are eventually disposed to be offset rearwards so as to become closer to the inflator at a location where the supply ports disposed on the front-seat inlet port portions side of the inner tube, whereas the supply ports communicating with the inflating portion disposed on the front side which comes in the vicinity of the inflator for the rear-seat inlet port are disposed so as to be offset to the front side so as to approach the inflator at a location where the supply ports are disposed on the rear-seat inlet port portions side.

Moreover, when the inflator 39 is actuated, in the embodiment, since the inside diametrical dimension of the inner tube 32 is set to be $\phi$40, the cross-sectional area of the inner tube when it has inflated is So, the lengthwise dimension L of the inner tube is set to be 1875mm, the inside diametrical dimension of the supply ports 34, 34G are set to be $\phi$11, and the inside diametrical dimension of the remaining supply ports 34A, 34B, 34C, 34D, 34E, 34F are set to be $\phi$16, So/L•S=$0.483 \times 10^{-3}$ results from a calculation made by using these values in So/L•S , and from this the total opening area of 34, 34A, 34B, 34C, 34D, 34E, 34F, 34G is to fall within a range expressed by the following expression;

$$0.25 \times 10^{-3} \leqq So/L \cdot s \leqq 0.55 \times 10^{-3}$$

Owing to this, the internal pressure in the inner tube 32 resulting when the inner tube 32 has inflated by allowing the inflating gas G to flow thereinto from the inflator 39 becomes substantially uniform. As a result, the amount of the inflating gas G which flows into the respective inflating portions 16A, 16B, 16C, 16D, 19A, 19B, 19C, 19D from the respective supply ports 34, 34A, 34B, 34C, 34D, 34E, 34F, 34G can be made substantially constant after the inflation of the inner tube 32 is completed, whereby the respective inflating portions 16A, 16B, 16C, 16D, 19A, 19B, 19C, 19D are allowed to deploy and inflate substantially uniformly.

Consequently, in the air bag 11 according to the embodiment, the air bag main body 12 in which the inner tube 32 is disposed is allowed to deploy and inflate such that the respective inflating portions 16A, 16B, 16C, 16D, 19A, 19B, 19C, 19D are allowed to deploy and inflate uniformly.

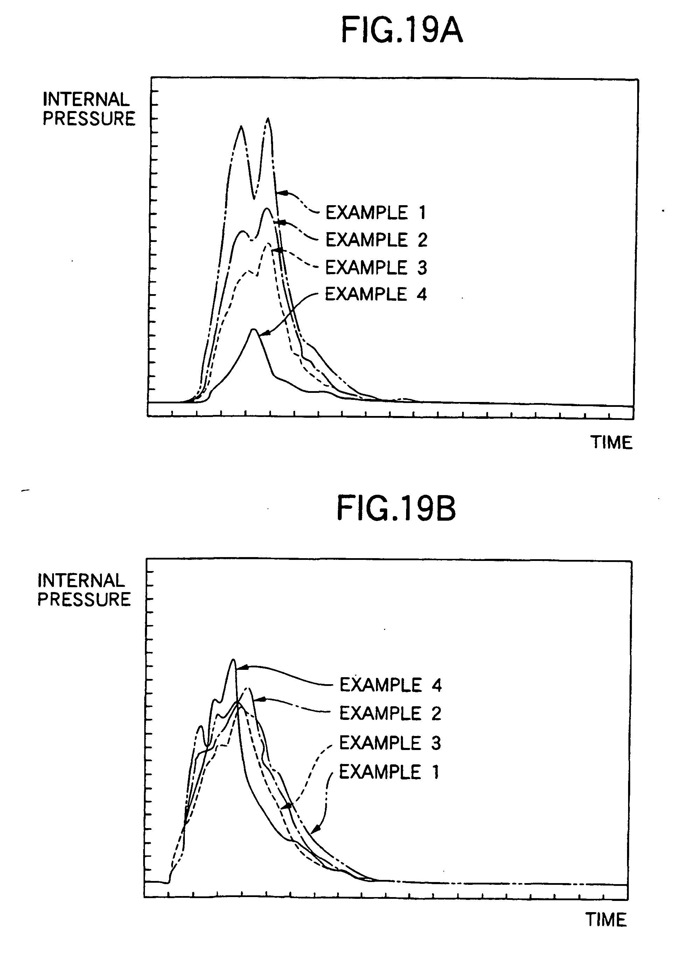

In addition, graphs are shown as experimental examples in Figs. 19A and 19B which show the results of measurement of internal pressures when the lengthwise dimension L of the inner tube 32 is set to be 1865mm, the inside diametrical dimension d of the inner tube is set to be $\phi$40, and the total opening area s of the respective supply ports 34, 34 A, 34B, 34C, 34D, 34E, 34F, 34G, varies. The axis of ordinates represents internal pressures in the inner tube 32 whereas the axis of abscissas time. Fig. 19A expresses internal pressures in the inner tube 32 disposed on the front-seat side whereas Fig. 19B internal pressures of the inner tube 32 disposed on the rear-seat side.

In Fig. 19, Experimental Example 1 shows the results of measurement of internal pressures in the inner tube 32 when , the inside diametrical dimension of the supply ports 34, 34G is set to be $\phi$9 and the inside diametrical dimension of the remaining supply ports 34A, 34B, 34C, 34D, 34E, 34F is set to be $\phi$14. Experimental Example 2 shows similar results when the inside diametrical dimension of the supply ports 34, 34G is set to be $\phi$11 and the inside diametrical dimension of the remaining supply ports 34A, 34B, 34C, 34D, 34E, 34F is set to be $\phi$16. Experimental Example 3 shows similar results when the inside diametrical dimension of the supply ports 34, 34G is set to be $\phi$14 and the inside diametrical dimension of the remaining supply ports 34A, 34B, 34C, 34D, 34E, 34F is set to be $\phi$19. Experimental Example 4 shows similar results when the inside diametrical dimension of the supply ports 34, 34G is set to be $\phi$19 and the inside diametrical dimension of the remaining supply ports 34A, 34B, 34C, 34D, 34E, 34F is set to be $\phi$24. Note that the internal pressure in the inner tube 32 was measured between the supply ports 34 and 34A on the front-seat side whereas between the supply ports 34D and 34E on the rear-seat side.

It is seen from the graphs in Fig. 19 that in a case where the internal pressure in the supply ports is set as shown in Experimental Example 1, since the internal pressure in the inner tube 32 on the front-seat side is high whereas the internal pressure on the rear-seat side is low, the internal pressure in the inner tube 32 is not uniform. Then, in a case where the internal pressure in the supply ports is set as shown in Experimental Example 4, since the internal pressure on the front-seat side is low whereas the internal pressure on the rear-seat side becomes high, the internal pressure in the inner tube 32 is not uniform. Then, in a case where the internal pressure in the supply ports is set as shown in Experimental Example 2 or 3, the internal pressures on the front-seat side and the rear-seat side become substantially uniform.

Namely, when the inside diametrical dimensions of the respective supply ports are set to be those shown in Experimental Examples 1 to 4, So is set to be $400\pi$, and L is set to be 1865, so that those values are used in the aforesaid expression, the total opening area s of the supply ports in Experimental Example 1 becomes 334.5 $\pi$. Then, a value obtained from So/L•S is 0. 641 $\times 10^{-3}$, which does not fall within the range of the aforesaid of the expression.

In addition, the total opening area s of the supply ports in Experimental Example 2 becomes $444.5\pi$,

and a value obtained from So/L•S is $0.483 \times 10^{-3}$. The total opening area s of the supply ports in Experimental Example 3 becomes $693.5\pi$, and a value obtained from So/L•S is $0.335 \times 10^{-3}$. As a result, the values obtained from So/L•S are both allowed to fall within the range of the aforesaid expression.

Furthermore, furthermore, the total opening area s of the supply ports in Experimental Example 4 becomes $1044.5\pi$. Then, a value obtained from So/L•S is $0.205 \times 10^{-3}$, which does not fall within the range of the aforesaid of the expression.

Consequently, in a case where the lengthwise dimension L of the inner tube 32 is set to be 1865mm and the inside diametrical dimension d of the inner tube d is set to be $\phi40$, in case the inside diametric dimension of the supply ports is set to fall within the range of Experimental Example 2 or 3, in the early stage of inflation of the air bag 11, the inner tube 32 is allowed to inflate such that the internal pressure in the inner tube 32 can become substantially uniform.

As a result from the above experiments, in a case where the inside diametrical dimension of the inner tube 32 is set to be $\phi40$ and the lengthwise dimension thereof is set to be 1875mm, provided that the construction is set such that the total opening area s of the supply ports falls within the range of the aforesaid expression, as shown in Fig. 19, the internal pressure in the inside diameter 32 can be made substantially uniform when the inner tube 32 has inflated by allowing the inflating gas G to flow from the inflator 39.

Note that while in the embodiment the opening area (inside diametric dimension) of the supply port 34, 34G for supplying the inflating gas into the inflating portion 16A disposed on the front side of the front-seat gas-flowable portion 15 and the inflating portion 19D disposed on the rear side (the side in the vicinity of the inflator) of the rear-seat gas-flowable portion 18 is set to be smaller than the opening area (inside diametric dimension) of the remaining supply ports 34A, 34B, 34C, 34D, 34E, 34F the opening areas (the inside diametric dimensions) of the respective supply ports is not limited to those, but the opening areas (the inside diametric dimensions) of all the supply ports may be set to be substantially the same provided that the total opening area thereof falls within the range which can be included in the aforesaid expression. However, this case does not form part of the present invention. In a case where the opening areas of the respective supply ports are set to be identical, the flow rate of the inflating gas G from the supply ports 34, 34G on the distal end side of the inner tube 32 and on the nearer side to the inflator 39, respectively, tend to be larger than those from the other supply ports 34A, 34B, 34C, 34D, 34E, 34F. Owing to this, in order for the inner tube 32 to inflate such that the internal pressure therein becomes substantially uniform, it is preferable that the supply ports 34, 34G disposed on the distal end side of the inner tube 32 and on the nearer side to the inflator 39, respectively, are set to be smaller than the opening areas of the supply ports 34A, 34B, 34C, 34D, 34E, 34F disposed at the other locations. Then, it is preferable that the opening areas of the supply ports 34, 34G disposed on the distal end side of the inner tube 32 and on the nearer side to the inflator 39, respectively, are set to be 25 to 75% (desirably, 40 to 60%) of the opening areas of the other supply ports 34A, 34B, 34C, 34D, 34E, 34F. This is because in case they are less than 25%, the opening areas of the supply ports 34, 34G become too small when compared with those of the remaining supply ports 34B, 34C, 34D, 34E, 34F, 34G, this leading to a risk of disturbing the deployment and inflation of the inflating portions 16A, 19D which receive the supply of inflating gas from the supply ports 34, 34G, respectively. On the contrary, in case the opening areas are set to be equal to or larger than 75%, the flow rate of the inflating gas G from the supply ports 34, 34G is increased, and there is no point in differentiating the opening areas of the supply ports.

In addition, while in the above embodiment four inflating portions 16, 19 are provided for the front-seat and rear-seat gas-flowable portions 15, 18, respectively, and eight supply ports are provided in the inner tube 32, of course, the numbers of inflating portions 16, 19 and supply ports are not limited to those, but the number of supply ports to be provided may optionally be set to any number selected from a range of 5 to 20. In addition, in case the widthwise dimension of the inflating portions as viewed in the longitudinal direction is large, a plurality of supply ports may be provided at substantially uniform intervals for a single inflating portion.

Additionally, in case the number of supply ports to be disposed is less than five, the opening area of each supply port becomes too large, this making it difficult for the inner tube 32 to inflate such that the internal pressure therein becomes substantially uniform. On the contrary, in case the number of supply ports to be disposed is more than 20, the opening area of each supply port becomes too small, this leading to a risk of failure of the inner tube. Furthermore, in case the lengthwise dimension L of the inner tube 32 becomes less than 1500mm, the tube disposing portion 14 in the air bag main body 12 is too short, the point in providing the inner tube 32 being lost. On the contrary, in case the lengthwise dimension L of the inner tube 32 becomes equal to or larger than 3000mm, then the inner tube 32 becomes too long, this making it difficult for the inner tube 32 to inflate such that the internal pressure therein become substantially uniform.

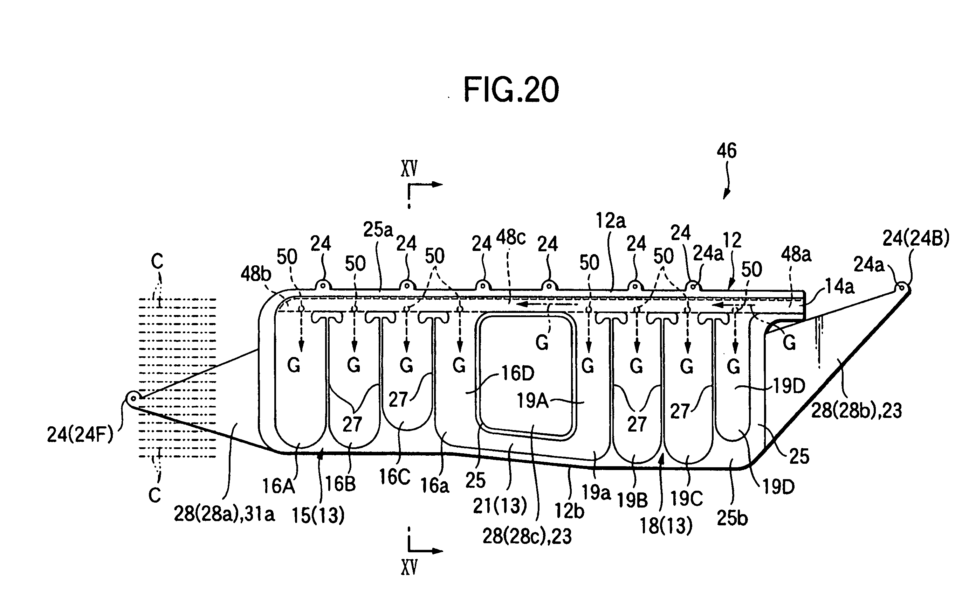

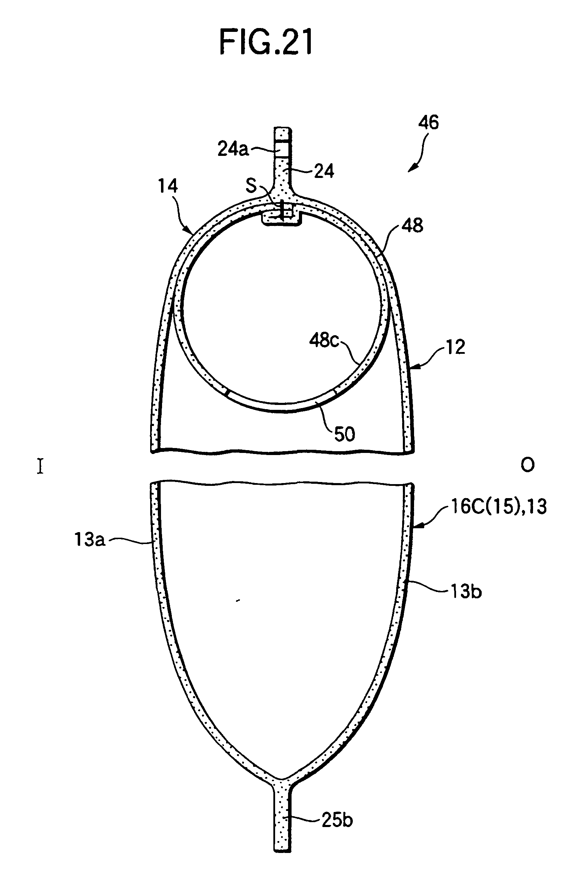

In addition, an air bag shown in Figs. 20, 21 may be used as an air bag 46 for use in the aforesaid air bag system M. The airbag 46 comprises an air bag main body 12 and an inner tube 48 disposed along an upper edge side of the air bag main body 12. The construction of the air bag 46 is identical to that of the air bag 11 which has been described above except for the inner tube 48.

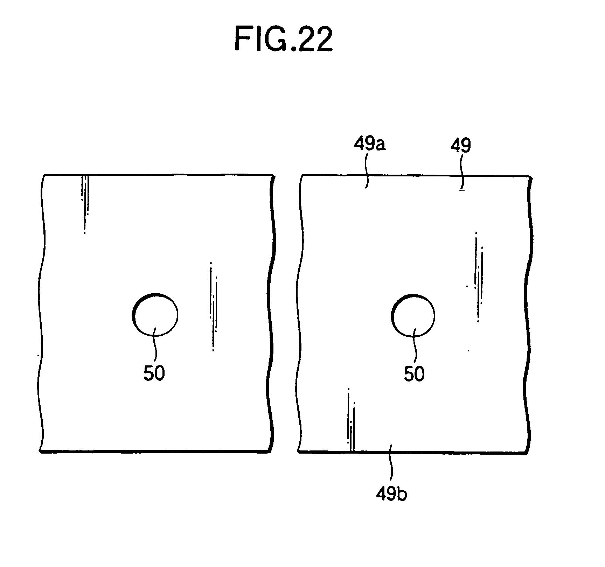

Similarly to the inner tube 32 which has been described above, the inner tube 48 is formed into a cylinder, and a rear end 48a thereof is thermally welded to an inner circumferential surface side of a connecting port portion 14a, whereby the inner tube 48 is inserted into a tube disposing portion 14 of the air bag main body 12 to be disposed therein. Then, similarly to the inner tube 32 which has been described above, the inner tube 48 is formed of a single piece of sheet material 49 (refer to Fig. 22) made of a fabric which is produced using polyamide or polyester yarns. The sheet material 49 is then folded in half in a widthwise direction so that both edges 49a, 49b are overlapped each other and are then sutured with sutures S made of polyamide yarns, whereby the sheet material 49 is formed into a cylindrical configuration. In addition, a front end 48b of the inner tube 48 is closed which is located far away from the connecting port portion 14a.

Similarly to the inner tube 32 which has been described above, a plurality of supply ports 50 are formed in a circumferential wall 48c of the inner tube 48 on a lower side thereof which supply ports 50 are made to open in a circular shape so that an inflating gas G can be supplied into respective gas-flowable portions 15, 18. Similarly to the supply ports 34 in the inner tube 32 which has been described above, the respective supply ports 50 are made to open at positions which are located above respective inflating portions 16A, 16b, 16c, 16D, 19A, 19B, 19C, 19D, so that the inflating gas G can be supplied into the respective inflating portions 16A, 16b, 16c, 16D, 19A, 19B, 19C, 19D from the inside of the inner tube 48. Then, as shown in Fig. 20, the respective supply ports 50 are disposed in the vicinity of a lower end of the inner tube 48 so that the supply ports 50 are disposed on a distal end side of the inner tube 48 when the air bag main body 12 is folded up. Thus, the supply ports 50 are formed in the sheet material 49 in the vicinity of a transverse center thereof (refer to Fig. 22).

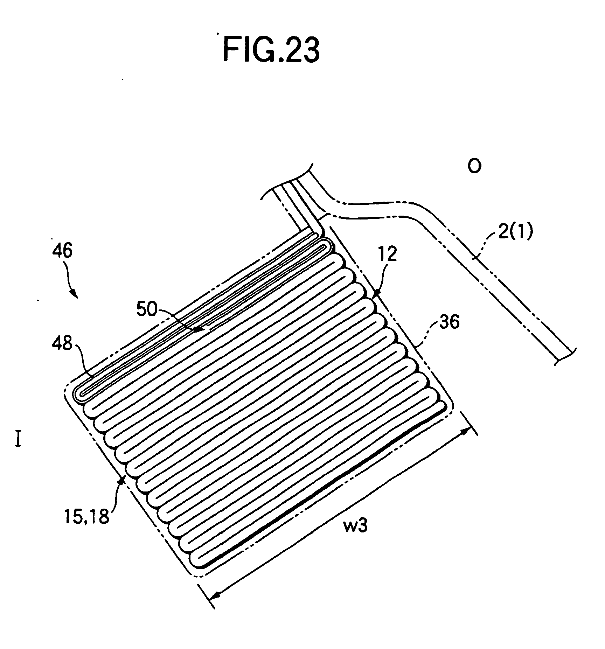

Then, this air bag 46 is, as shown in Fig. 23, folded up to be stored with the widthwise dimension w3 of the air bag 46 resulting when folded up being set such that the supply ports 50 in the inner tube 48 are disposed on the distal end side of the folded inner tube 48 and at the substantially transverse center of the folded air bag main body 12 when the air bag main body 12 which is to be folded up together with the inner tube 48 has completely been folded up.

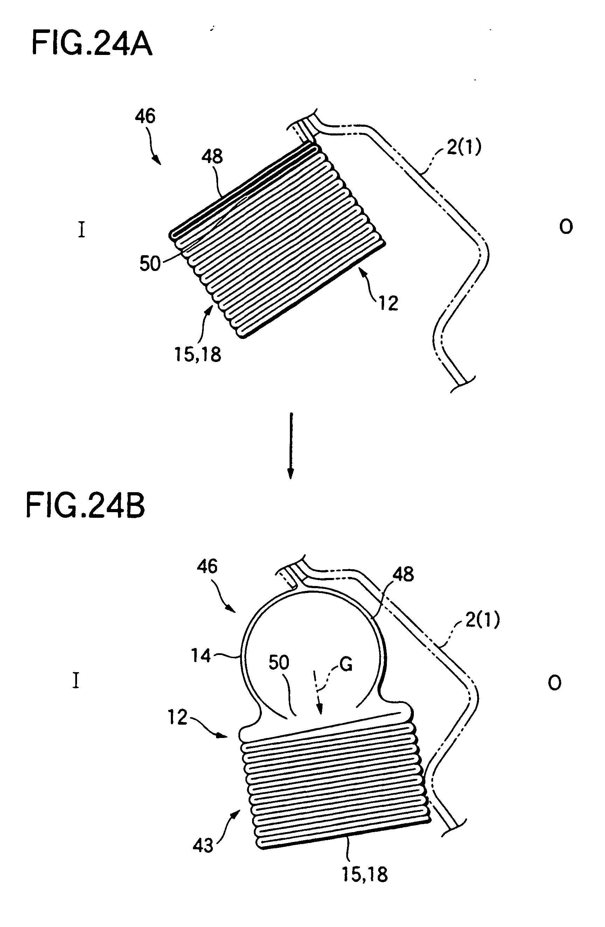

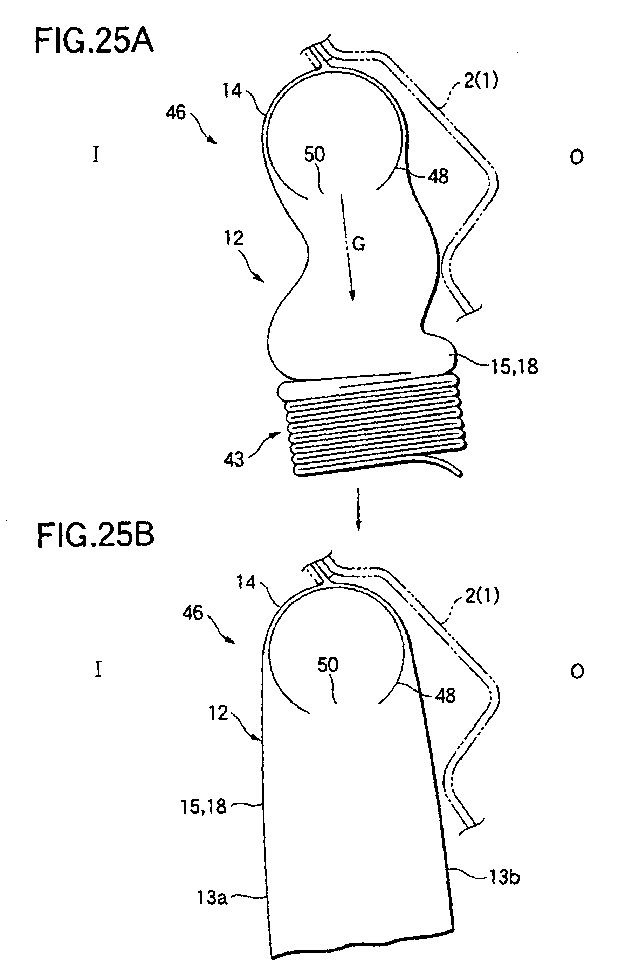

In a case where the air bag 46 is constructed as has been described above, since the supply ports 50 of the inner tube 48 are disposed as shown in Figs. 23, 24A, when the inflating gas G is discharged from an inflator 39 and the inflation of the inner tube 48 has substantially been completed, the supply ports 50 are disposed, as shown in Fig. 24B, at the substantially transverse center of the folded air bag main body 12 and are made to open downwardly (to a side of the air bag main body 12 where there exist portions where the folds have not yet been unfolded) thereat. Owing to this construction, as shown in Fig. 25A, the inflating gas G eventually flows from the supply ports 50 into the gas-flowable portions 15, 18 (the air bag main body 12) while downwardly pushing the portions 43 (the gas-flowable portions 15, 18) of the air bag main body 12 where the folds have not yet been unfolded along the folding direction. As a result, as shown in Fig. 25B, the air bag main body 12 projects smoothly downwardly in the folding direction of the air bag main body 12 while unfolding the folds in the portions 43 (the gas-flowable portions 15, 18) where the folds have not yet been unfolded without deflecting largely to the inside I or the outside O of the vehicle, whereby the deployment and inflation of the air bag main body can be completed.

In addition, paying attention to the conditions of the respective air bags 11, 46 when the inflation of the inner tubes 32, 48 is substantially completed, in case the supply ports are, as shown in Fig. 24B, disposed to be made to open at the substantially transverse center of the folded air bag main body 12 on the side of the air bag main body 12 where the portions 43 exist in which folds have not yet been unfolded when the inflation of the inner tubes 32, 48 is substantially completed, the inflating gas G eventually flows from the supply ports into the gas-flowable portions 15, 18 while downwardly pushing the portions 43 of the air bag main body 12 where the folds have not yet been unfolded along the folding direction. As a result, the air bag main body 12 projects smoothly downwardly in the folding direction of the air bag main body 12 while unfolding the folds in the portions 43 where the folds have not yet been unfolded without deflecting largely to the inside I or the outside O of the vehicle, whereby the deployment and inflation of the bag main body 12 can be completed.

Consequently, in the air bag system according to the invention, as with the respective supply ports in the respective air bags 11, 46, even if the supply ports in the inner tube are not disposed at the position which is offset from the lower end of the inner tube towards the outside O of the vehicle or at the lower end of the folded inner tube, if the air bag comprises the inner tube having the supply ports which are disposed to be made to open at the substantially transverse center of the folded air bag main body on the side of the air bag main body where the portions exist in which the folds have not yet been unfolded when the inflation of the inner tubes is substantially completed, for example, an air bag may be used in which the inner tube is disposed in which the supply ports are formed at the position which is offset from the vicinity of the lower end of the inner tube towards the inside of the vehicle.

In addition, in the above embodiments, while the respective air bags 11, 46 are folded up in the bellows-like fashion for storage on the upper edge side of the circumferential edge of the opening W (W1, W2), when folded up in the bellows-like fashion, the air bag main body 12 may be folded up together with the inner tube 32, 48 in the bellows-like fashion in a state in which the lower edge 12b side of the air bag main body 12 is first folded back to a position near below the inner tube 32, 48. Furthermore, the method of folding the air bag is not limited to the method described above. For example, in the air bags 11, 46, portions of the air bags in the vicinity of the inner tubes 32, 48 may be folded up in the bellows-like fashion whereas the air bag main body 12 disposed below the inner tubes 32, 48 maybe folded in a roll-like fashion from the lower edge 12b side towards the inner tube 32, 48 side. In addition, even in a case where the air bags 11, 46 are folded up in the roll-like fashion, since the air bags 11, 46 are compressed vertically while being folded up so as to be stored on the upper edge side of the circumferential edge of the opening W (W1, W2), folds are to be formed both on the inside and outside of folded portions of the air bag main body 12.

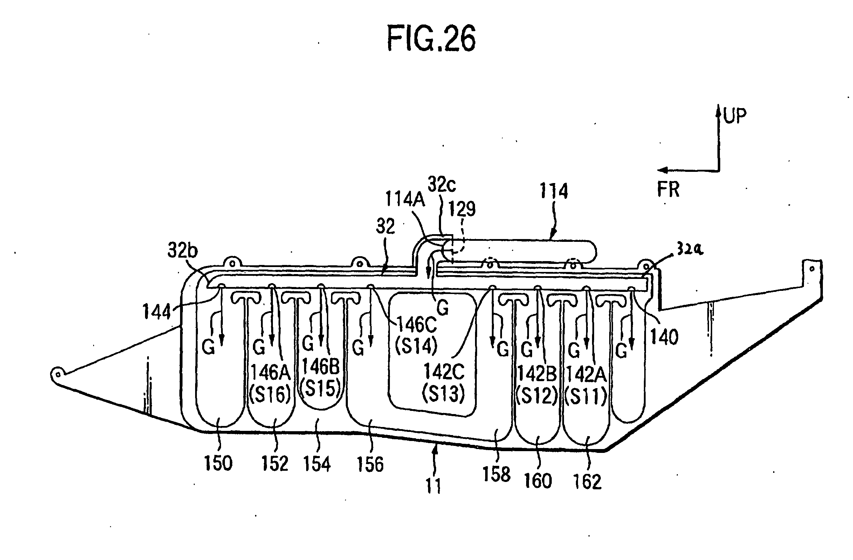

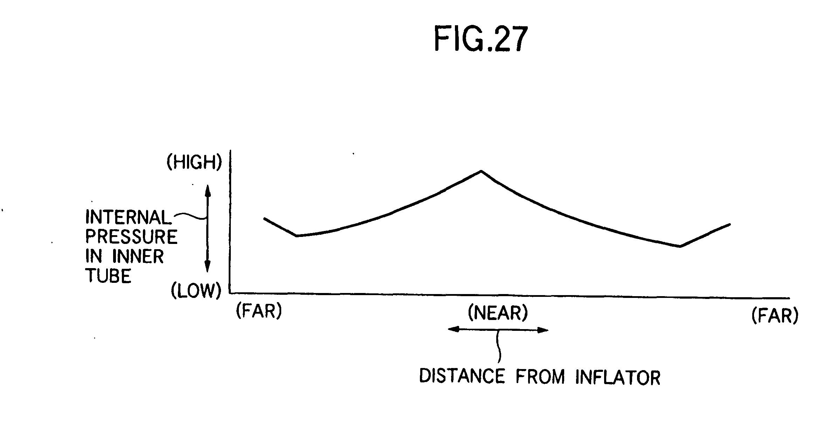

Next, referring to Figs. 26 and 27, another embodiment of a head protection air bag system according to the invention will be described.

As shown in Fig. 26, in this embodiment, a connecting port 129 is formed at a longitudinally central portion of an upper edge portion of an air bag 11, and a gas releasing port 114A of an inflator 114 disposed at a middle portion of a roof side rail RR is connected to a longitudinally central portion 32c of an inner tube 32. Owing to this, the inner tube 32 is closed at both a rear end 32a and a front end 32b.

Gas exit ports (supply ports) 140, 142A, 142B, 142C are formed in the inner tube 32 along a longitudinal direction or a back-and-forth direction of a vehicle body from the rear end 32a towards the gas releasing port 114A of the inflator 114, whereas gas exit ports (supply ports) 144, 146A, 146B, 146C are formed in the inner tube 32 along the longitudinal direction or the back-and-forth direction of the vehicle body from the front end 32b to the gas releasing port 114A of the inflator 114.

The opening areas of the gas exit ports 140, 144 next, respectively, to the rear end 32a and the front end 32b of the inner tube 32 are set to be smaller than the opening areas of the gas exit ports 142A, 146A next, respectively, to the gas exit ports 140, 144. Furthermore, in this embodiment, the opening areas S11, S12, S13, S14, S15, S16 of the gas exit ports 142A, 142B, 142C and the gas exit ports 144A, 144B, 144C are such that the opening area of the gas exit port which is located farther from the gas releasing port 114A of the inflator 114 is made equal to or wider than the opening area of the gas exit port which is located next thereto on the nearer side thereof to the gas releasing port 114A of the inflator 114 and to be more specific, the opening areas of the gas exit ports are such that S11<S12<S13 and S14<S15<16.

In addition, the respective gas exit ports 144, 146A, 146B, 146C, 142C, 142B, 142A, 140 of the inner tube 32 are formed in such a manner as to face downwardly, and inflation chambers 150, 152, 154, 156, 158, 160, 162, 164 are formed below the respective gas exit ports 144, 146A, 146B, 146C, 142C, 142B, 142A, 140, respectively.

Next, the function of the embodiment will be described.

In this embodiment, when the inflator 114 activates inflation gas from the inflator 114 passes through the interior of the inner tube 32 as indicated by arrows W illustrated in Fig. 26 and is then supplied into the respective inflation chambers 150, 152, 154, 156, 158, 160, 162, 164 of the air bag 11 via the respective gas exit ports 144, 146A, 146B, 146C, 142C, 142B, 142A, 140, respectively. As a result, the air bag 11 deploys in a curtain-like fashion similarly to the aforementioned embodiment so as to protect the head of a passenger.

As this occurs, as shown in Fig. 27, the gas pressure (the internal pressure) in the inner tube 32 becomes lower as the inner tube 32 extends farther away from the inflator 114 but the gas pressure is increased in the vicinity of the rear end 32a and the front end 32b of the closed inner tube 32.

To cope with this, in this embodiment, as shown in Fig. 26, the opening areas of the gas exit ports 140, 144 next, respectively, to the rear end 32a and the front end 32b of the inner tube 32 are set to be smaller than the opening areas of the gas exit ports 142A, 146A next, respectively, to the gas exit ports 140, 144, and the opening areas S11, S12, S13, S14, S15, S16 of the gas exit ports 142A, 142B, 142C and the gas exit ports 144A, 144B, 144C are such that the opening area of the gas exit port which is located farther from the gas releasing port 114A of the inflator 114 is made equal to or wider than the opening area of the gas exit port which is located next thereto on the nearer side thereof to the gas releasing port 114A of the inflator 114 and to be more specific, the opening areas of the gas exit ports are such that S11<S12<S13 and S14<S15<16. Owing to this, the condition of gas released from the respective gas exit ports 144, 146A, 146B, 146C, 142C, 142B, 142A, 140 can be made substantially equal.

As a result, by closing the rear end 32a and the front end 32b of the inner tube 32 not only can the burst of the air bag 11 be prevented but also quick and secure deployment and inflation of the air bag 11 can be ensured.

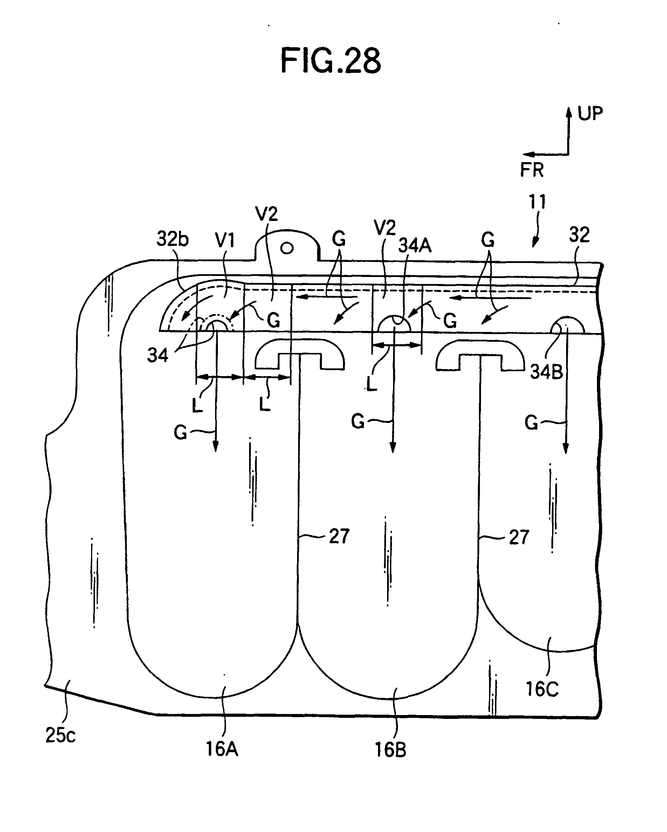

Next, still another embodiment of a head protection air bag system according to the invention will be descried with reference to Fig. 28.

As shown in Fig. 28, in this embodiment, a front end 32b of an inner tube 32 is closed, and a portion extending over a certain length L at the front end 32b is bulged upwardly to form an arc-like configuration as viewed from the side so that the volume V1 of this portion becomes larger than the volume V2 of a location extending over a certain length L at another location of the inner tube 32 along the longitudinal direction thereof.

Next, the function of the embodiment will be described.

Namely, when the air bag body deploys, while the inflation chamber 16A existing below the gas exit port 34 tends to deploy slightly earlier than the other inflation chambers by such an extent that the flow rate of gas becomes faster at the closed front end 32b of the inner tube 32 than the other portions thereof, in this embodiment, since the volume V1 of the portion extending over the certain length L at the closed front end 32b is made larger than the volume V2 of the portion of the other location of the inner tube 32 extending over the certain length L along the longitudinal direction thereof by bulging the portion extending over the certain length at the closed front end 32b upwardly to form an arc-like configuration as viewed from the side, the internal pressure of the inner tube 32 at the front end is allowed to become lower to be equal to the internal pressure of the other portion. As a result, the condition of gas released from the respective gas exit ports 34, 34A, 34B, 34C, 34D, 34F, 34G can be made substantially equal. Owing to this, not only can the burst of the air bag 11 be prevented but also quick and secure deployment and inflation of the air bag 11 can be ensured.

In addition, the construction of this embodiment may be applied to the rear end 32a of the inner tube 32 described in the above embodiement.

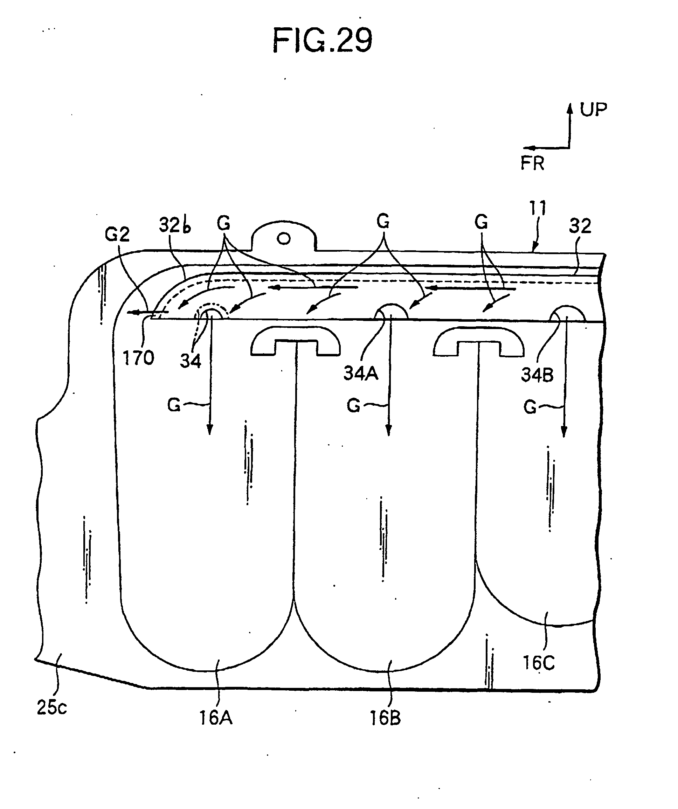

Next, referring to Fig. 29, an example of a head protection air bag system which is not part of the invention will be described.

As shown in Fig. 29, a front end 32b of an inner tube 32 is not totally closed but a gas vent hole 170 is formed in an extremely distal end of the inner tube.

Next, the function of the example will be described.

Namely, when the air bag body deploys, while the inflation chamber 16A existing below the gas exit port 34 tends to deploy slightly earlier than the other inflation chambers by such an extent that the flow rate of gas becomes faster at the closed front end 32b of the inner tube 32 than the other portions thereof, in this embodiment, since the front end 32b of the inner tube 32 is not totally closed but the gas vent hole 170 is formed in the extremely distal end of the inner tube, part of the gas (indicated by an arrow G2) escapes from the gas vent hole 170, whereby the internal pressure of the inner tube 32 at the front end is lowered to become equal to that of the other portions of the inner tube.

As a result, the condition of gas released from the respective gas exit ports 34, 34A, 34B, 34C, 34D, 34E, 34F, 34G can be made substantially equal. Owing to this, not only can the burst of the air bag 11 be prevented but also quick and secure deployment and inflation of the air bag 11 can be ensured.

In addition, the construction of this embodiment may be applied to the rear end 32a of the inner tube 32 described in the above embodiment.

Thus, while the invention has been described with reference to the specific embodiments, it is apparent to those skilled in the art that the invention is not limited to those embodiments. For example, while the inner tube 32 is used as the gas distribution means in the embodiments, the gas distribution means is not limited to the inner tube 32, but may be constructed differently and may be constituted by a metallic pipe.

In addition, while in the embodiments, the invention is applied to the head protection air bag system in which the inflator is disposed at the rear pillar RP and the intermediate portion of the roof side rail RR, the invention may be applied to a head protection air bag system in which the inflator 39 is disposed at a different location such as the front pillar FR.

Additionally, the head protection air bag system according to the invention may be applied to a vehicle having three or more rows of seats.

This invention should not be limited to the mode of carrying out this invention and the embodiments described above.

## Claims

1. A head protection air bag system (M) comprising :

   an inflator (39) disposed at the front, rear or in a central portion of an air bag body (12, 46); and a gas distribution means (32, 48) connected to said inflator (39), disposed within a gas passage of the air bag body (12, 46) and having a distal end portion which is closed,

   wherein an inflation gas (G) from said inflator (39) is supplied into inflation chambers (15, 18) of the air bag body (12, 46) via supply ports (34; 50; 140, 142, 144, 146) formed longitudinally in said gas distribution means (32,48) at predetermined intervals, **characterized in that** the opening area of said supply port next to the distal end portion of said gas distribution (32,48) means is made smaller than the opening area of any one of said supply ports located on a closer side to said inflator (39)

2. A head protection air bag system (M) comprising:

   an inflator (39) disposed at the front, rear or in a central portion of an air bag body (12, 46) and a gas distribution means connected (32, 48) to said inflator (39), disposed within a gas passage of the air bag boby and (12, 46) having a distal end portion which is closed,

   wherein an inflation gas (G) from said inflator (39) is supplied into inflation chambers (15,18) of the air bag body (12,46) via supply ports (34; 50; 140 142, 144, 146) formed longitudinally in said gas distribution means (32,48) at predetermined intervals, **characterized in that** the opening area of at least one of said supply ports (34; 50; 140, 142, 144, 146) of said gas distribution means (32, 48) is wider than the opening areas of at least one of said supply ports which are located nearer to a gas discharge port of said inflator (39) and at least one of said supply ports which are located nearer to the distal end portion of said gas distribution means (32, 48).

3. A head protection air bag system (M) according to claim 1 or 2, wherein the configuration of the closed distal end portion of said gas distribution means (32, 48) is formed into a downwardly oriented curved or tapered configuration so that the flow of gas within said gas distribution means is directed towards said supply port (34; 50; 140, 142, 144, 146) located at the distal end of said gas distribution means (32, 48).

4. A head protection air bag system (M) according to any one of the preceding claims,
   **characterized in that**
   the gas distribution means is an inner tube (32,48),
   said air bag main body comprises a gas-flowable portion (13) which can inflate in such a manner as to separate an inside wall portion from an outside wall portion when said inflating gas (G) flows into said gas-flowable portion and a non-gas-flowable portion (23) into which no inflating gas is allowed to flow,
   said gas-flowable portion (13) comprises a plurality of inflating portions (15,18) which are arranged in parallel with each other along an axial direction of said inner tube (32, 48) while being partitioned by said non-gas-flowable portion (23) and which each have an inlet port portion (20) made to open towards said inner tube,
   said inner tube (32, 48) being provided with supply ports 34 which are disposed in such a manner as to confront said respective inlet port portions (20) and are made to open narrower than the opening widthwise dimension of said inlet port portions so that said inflating gas (G) is allowed to flow into said respective inflating portions, and
   at least said supply port of said inner tube which is disposed in the vicinity of said inflator is disposed to be offset closer to said inflator (39) than a widthwise center of said inlet port portion (20) which communicates with said supply port (34).

5. A head protection air bag system (M) according to claim 1 or 2 charaterized in that the gas distribution means is formed by
   an inner tube disposed along an upper edge side in said air bag main body (12, 46) for guiding an inflating gas (G) from an inflator (39) into said air bag main body, said inner tube (32, 48) being constructed to have supply port (34) formed on a lower side of a circumferential wall thereof for supplying an inflating gas (G) into said air bag main body,
   said air bag main body (12) being folded up together with said inner tube (32,48) disposed therein vertically in such a manner as to overlap from a state in which an outside wall portion and an inside wall portion thereof overlap each other for storage on an upper edge side of the opening,
   said air bag main body (12) being folded up in such a manner that said supply ports (34) of said inner tube (32, 48) open substantially centrally in the transverse direction of said air bag main body so folded up on a side where the folds of said air bag main body have not yet been unfolded when said inner tube has inflated substantially completely after an inflating gas has been allowed to flow into the air bag.

6. A head protection air bag system (M) according to claim 5, wherein said supply ports (34) formed in said inner tube (32, 48) are disposed in such a manner as to open downwardly at a substantially central portion in a transverse direction of said air bag main body (12) so folded up when said air bag main body has completely been folded up.

7. A head protection air bag system (M) according to claim 5, wherein said supply ports (34) of said inner tube are disposed in such a manner as to open downwardly without extending across folds of said air bag main body (12) when said air bag main body has completely been folded up.

8. A head protection air bag system (M) according to claim 1, wherein said supply ports (34) of said gas distribution means (32, 48) formed by an inner tube are disposed on a lower end side of said inner tube so folded and at a substantially central portion in the transverse direction of said air bag main body (12,46) so folded up when said air bag main body has completely been folded up.

9. A head protection air bag system (M) according to claim 1,
   wherein the inside diametrical dimension of said inner tube 32, 48 is set to fall within a range of $\phi$25 to 60 mm, the cross-sectional area of said inner tube 32,48 when it has inflated is So and the lengthwise dimension L of said inner tube 32, 48 is set to fall within a range of 1500 to 3000mm, the total opening area s of said supply ports is set to fall within a range expressed by the following expression;

$$0.25 \times 10^{-3} \leqq So/L \cdot s \leqq 0.55 \times 10^{-3}.$$

**Patentansprüche**

1. Kopfschutzairbagsystem (M), enthaltend:

   eine Aufblaseeinrichtung (39), die an einem vorderen, hinteren oder in einem zentralen Bereich eines Airbagkörpers (12, 46) angebracht ist; und

ein Gasverteilungsmittel (32, 48), das mit der Aufblaseeinrichtung (39) verbunden ist, das innerhalb eines Gasdurchlasses des Airbagkörpers (12, 46) angebracht ist und einen distalen Endbereich aufweist, der geschlossen ist,

wobei ein aufblasendes Gas (G) von der Aufblaseeinrichtung (39) in Aufblasekammern (15, 18) des Airbagkörpers (12, 46) über Zufuhröffnungen (35; 50; 140, 142, 144, 146), die in Längsrichtung in dem Gasverteilungsmittel (32, 48) unter vorgegebenen Intervallen geformt sind, zugeführt wird, **dadurch gekennzeichnet, dass** die Öffnungsfläche der Zufuhröffnung am nächsten an dem distalen Endbereich des Gasverteilungsmittels (32, 48) kleiner als die Öffnungsfläche von einer der Zufuhröffnungen gestaltet ist, die näher an der Aufblaseeinrichtung (39) angeordnet sind.

2.  Kopfschutzairbagsystem (M), enthaltend:

    eine Aufblaseeinrichtung (39), die an einem vorderen, hinteren oder in einem zentralen Bereich eines Airbagkörpers (12, 46) angebracht ist, und

    ein Gasverteilungsmittel (32, 48), das mit der Aufblaseeinrichtung (39) verbunden ist, das innerhalb eines Gasdurchlasses des Airbagkörpers (12, 46) angebracht ist und einen distalen Endbereich aufweist, der geschlossen ist,

    wobei ein aufblasendes Gas (G) von der Aufblaseeinrichtung (39) in Aufblasekammern (15, 18) des Airbagkörpers (12, 46) über Zufuhröffnungen (34; 50; 140, 142, 144, 146), die in Längsrichtung in dem Gasverteilungsmittel (32, 48) unter vorgegebenen Intervallen geformt sind, zugeführt wird, **dadurch gekennzeichnet, dass** die Öffnungsfläche von zumindest einer der Zufuhröffnungen (34; 50; 140, 142, 144, 146) des Gasverteilungsmittels (32, 48) weiter als die Öffnungsflächen von zumindest einer der Zufuhröffnungen ist, die näher an der Gasabgabeöffnung der Aufblaseeinrichtung (39) angeordnet sind, und von zumindest einer der Zufuhröffnungen, die näher an dem distalen Endbereich des Gasverteilungsmittels (32, 48) angeordnet sind.

3.  Kopfschutzairbagsystem (M) nach Anspruch 1 oder 2, wobei die Gestaltung des geschlossenen distalen Endbereichs des Gasverteilungsmittels (32, 48) in eine nach unten gerichtete, gekrümmte oder konisch zulaufende Gestalt geformt ist, so dass die Strömung des Gases innerhalb des Gasverteilungsmittels in Richtung auf die Zufuhröffnung (34;

50; 140, 142, 144, 146) gelenkt wird, die am distalen Ende des Gasverteilungsmittels (32, 48) angebracht ist.

4.  Kopfschutzairbagsystem (M) nach einem der vorhergehenden Ansprüche, **dadurch gekennzeichnet, dass**

    das Gasverteilungsmittel ein inneres Rohr (32, 48) ist;

    der Airbaghauptkörper einen Bereich (13) zur Gasströmung enthält, der derart aufgeblasen werden kann, dass ein innenliegender Wandbereich von einem außenliegenden Wandbereich getrennt wird, wenn das aufblasende Gas (G) in den Bereich zur Gasströmung einströmt, und einen Bereich (23) ohne Gasströmung enthält, in den kein aufblasendes Gas einströmen kann,

    der Bereich (13) zur Gasströmung eine Mehrzahl von Aufblasebereichen (15, 18) enthält, die parallel zueinander entlang einer Axialrichtung des inneren Rohrs (32, 48) angeordnet sind, wobei sie durch den Bereich (23) ohne Gasströmung getrennt sind, und wobei jeder einen Einlassbereich (20) aufweist, der dazu gestaltet ist, dass er sich in Richtung auf das innere Rohr öffnet,

    das innere Rohr (32, 48) mit Zufuhröffnungen (34) versehen ist, die derart angebracht sind, dass sie den jeweiligen Einlassöffnungsbereichen (20) gegenüberliegen und dazu gestaltet sind, dass sie sich enger als die Abmessung der Öffnung in Breitenrichtung der Einlassöffnungsbereiche öffnen, so dass das aufblasende Gas (G) in die jeweiligen Aufblasebereiche strömen kann, und

    zumindest die Zufuhröffnung des inneren Rohrs, die in der Umgebung der Aufblaseeinrichtung angebracht ist, so angebracht ist, dass sie näher an die Aufblaseeinrichtung (39) versetzt ist als ein Zentrum in Breitenrichtung des Einlassöffnungsbereichs (20), der mit der Zufuhröffnung (34) in Verbindung steht.

5.  Kopfschutzairbagsystem (M) nach Anspruch 1 oder 2, **dadurch gekennzeichnet, dass** das Gasverteilungsmittel durch ein inneres Rohr geformt ist, das entlang einer oberen Randseite in dem Airbaghauptkörper (12, 46) zum Führen eines aufblasenden Gases (G) von einer Aufblaseeinrichtung (39) in den Airbaghauptkörper angebracht ist, wobei das innere Rohr (32, 48) konstruiert ist, dass es Zufuhröffnungen (34) aufweist, die auf einer unteren Seite einer Umfangswand davon geformt sind, um ein aufblasendes Gas (G) in den Airbaghauptkörper zuzuführen,

    der Airbaghauptkörper (12) zusammen mit den inneren Rohr (32, 48), das darin angebracht ist, derart vertikal zusammengefaltet wird, dass er überlappend gefaltet ist, von einem Zustand, in dem ein außenseitiger Wandbereich und ein innenseitiger Wandbereich davon übereinanderliegen, zum Aufbewahren auf einer oberen Randseite der Öffnung,

der Airbaghauptkörper (12) derart aufgefaltet wird, dass die Gaszufuhröffnungen (34) des inneren Rohrs (32, 48) sich im Wesentlichen zentral in der Querrichtung des so zusammengefalteten Airbaghauptkörpers auf einer Seite öffnen, auf der die Falten des Airbaghauptkörpers noch nicht entfaltet worden sind, wenn das innere Rohr sich im Wesentlichen vollständig aufgeblasen hat, nachdem ein aufblasendes Gas in den Airbag strömen konnte.

6. Kopfschutzairbagsystem (M) nach Anspruch 5, wobei die Zufuhröffnungen (34), die in dem inneren Rohr (32, 48) geformt sind, derart angebracht sind, dass sie sich nach unten in einem im Wesentlichen zentralen Bereich in einer Querrichtung des Airbaghauptkörpers (12), der derart zusammengefaltet ist, öffnen, wenn der Airbaghauptkörper vollständig zusammengefaltet ist.

7. Kopfschutzairbagsystem (M) nach Anspruch 5, wobei die Zufuhröffnungen (34) des inneren Rohrs derart angebracht sind, dass sie sich nach unten öffnen, ohne sich über Falten des Airbaghauptkörpers (12) zu erstrecken, wenn der Airbaghauptkörper vollständig zusammengefaltet ist.

8. Kopfschutzairbagsystem (M) nach Anspruch 1, wobei die Zufuhröffnungen (34) des Gasverteilungsmittels (32, 48), die durch ein inneres Rohr geformt sind, auf einer unteren Endseite des derart gefalteten inneren Rohrs und in einem im Wesentlichen zentralen Bereich in der Querrichtung des derart gefalteten Airbaghauptkörpers (12, 46) angebracht sind, wenn der Airbaghauptkörper vollständig zusammengefaltet ist.

9. Kopfschutzairbagsystem (M) nach Anspruch 1, wobei die innenseitige Durchmesserabmessung des inneren Rohrs (32, 48) festgelegt ist, dass sie in einem Bereich von φ 25 bis 60 mm fällt, die Querschnittsfläche des inneren Rohrs (32, 48), wenn es sich aufgeblasen hat, So ist, und die Abmessung L in Längenrichtung des inneren Rohrs (32, 48) festgelegt ist, dass sie in einem Bereich von 1500 bis 3000 mm fällt, und die Gesamtöffnungsfläche s der Zufuhröffnungen festgelegt ist, dass sie innerhalb einen Bereich fällt, der durch den folgenden Ausdruck ausgedrückt wird:

$$0{,}25 \times 10^{-3} \leq So / L* s \leq 0{,}55 * 10^{-3}.$$

**Revendications**

1. Système de coussin de sécurité gonflable de protection de tête (M) comprenant :

un dispositif de gonflage (39) disposé à l'avant, à l'arrière ou dans une partie centrale d'un corps de coussin de sécurité gonflable (12, 46) ; et des moyens de distribution de gaz (32, 48) reliés audit dispositif de gonflage (39), disposés dans un passage de gaz du corps de coussin de sécurité gonflable (12, 46) et comportant une partie d'extrémité distale qui est fermée,

dans lequel un gaz de gonflage (G) provenant dudit dispositif de gonflage (39) est délivré dans des chambres de gonflage (15, 18) du corps de coussin de sécurité gonflable (12, 46) par l'intermédiaire d'orifices d'alimentation (34 ; 50 ; 140, 142, 144, 146) formés longitudinalement dans lesdits moyens de distribution de gaz (32, 48) à des intervalles prédéterminés, **caractérisé en ce que** la surface d'ouverture dudit orifice d'alimentation à proximité de la partie d'extrémité distale desdits moyens de distribution de gaz (32, 48) est réalisée plus petite que la surface d'ouverture de n'importe lequel desdits orifices d'alimentation situés sur un côté plus proche dudit dispositif de gonflage (39).

2. Système de coussin de sécurité gonflable de protection de tête (M) comprenant :

un dispositif de gonflage (39) disposé à l'avant, à l'arrière ou dans une partie centrale d'un corps de coussin de sécurité gonflable (12, 46) ; et des moyens de distribution de gaz (32, 48) reliés audit dispositif de gonflage (39), disposés dans un passage de gaz du corps de coussin de sécurité gonflable (12, 46) et comportant une partie d'extrémité distale qui est fermée,

dans lequel un gaz de gonflage (G) provenant dudit dispositif de gonflage (39) est délivré dans des chambres de gonflage (15, 18) du corps de coussin de sécurité gonflable (12, 46) par l'intermédiaire d'orifices d'alimentation (34 ; 50 ; 140, 142, 144, 146) formés longitudinalement dans lesdits moyens de distribution de gaz (32, 48) à des intervalles prédéterminés, **caractérisé en ce que** la surface d'ouverture d'au moins l'un desdits orifices d'alimentation (34 ; 50 ; 140, 142, 144, 146) desdits moyens de distribution de gaz (32, 48) est plus large que les surfaces d'ouverture d'au moins l'un desdits orifices d'alimentation qui sont situés plus près d'un orifice de décharge de gaz dudit dispositif de gonflage (39) et d'au moins l'un desdits orifices d'alimentation qui sont situés plus près de la partie d'extrémité distale desdits moyens de distribution de gaz (32, 48).

3. Système de coussin de sécurité gonflable de protection de tête (M) selon la revendication 1 ou 2, dans lequel la configuration de la partie d'extrémité distale fermée desdits moyens de distribution de gaz (32, 48) est formée en une configuration incurvée ou effilée orientée vers le bas de sorte que la circulation de gaz dans lesdits moyens de distribution de gaz soit dirigée vers ledit orifice d'alimentation (34 ; 50 ; 140, 142, 144, 146) situé à l'extrémité distale desdits moyens de distribution de gaz (32, 48).

4. Système de coussin de sécurité gonflable de protection de tête (M) selon l'une quelconque des revendications précédentes, **caractérisé en ce que** les moyens de distribution de gaz sont un tube intérieur (32, 48);

ledit corps principal de coussin de sécurité gonflable comprend une partie permettant la circulation d'un gaz (13) qui peut se gonfler de manière à séparer une partie de paroi intérieure d'une partie de paroi extérieure lorsque ledit gaz de gonflage (G) circule dans ladite partie permettant la circulation d'un gaz, et une partie ne permettant pas la circulation d'un gaz (23) dans laquelle aucun gaz de gonflage n'est autorisé à circuler,

ladite partie permettant la circulation d'un gaz (13) comprend une pluralité de parties qui se gonflent (15, 18) qui sont agencées parallèlement les unes aux autres dans une direction axiale dudit tube intérieur (32, 48) tout en étant divisées par ladite partie ne permettant pas la circulation d'un gaz (23) et qui comportent chacune une partie d'orifice d'entrée (20) réalisée de manière à s'ouvrir vers ledit tube intérieur,

ledit tube intérieur (32, 48) étant pourvu d'orifices d'alimentation (34) qui sont disposés de manière à faire face auxdites parties d'orifice d'entrée (20) respectives et qui sont réalisés de manière à s'ouvrir en une dimension inférieure à la dimension d'ouverture dans le sens de la largeur desdites parties d'orifice d'entrée de sorte que ledit gaz de gonflage (G) soit autorisé à circuler dans lesdites parties qui se gonflent respectives, et

au moins ledit orifice d'alimentation dudit tube intérieur qui est disposé à proximité dudit dispositif de gonflage est disposé de manière à être décalé plus près dudit dispositif de gonflage (39) qu'un centre dans le sens de la largeur de ladite partie d'orifice d'entrée (20) qui communique avec ledit orifice d'alimentation (34).

5. Système de coussin de sécurité gonflable de protection de tête (M) selon la revendication 1 ou 2, **caractérisé en ce que**

les moyens de distribution de gaz sont formés par un tube intérieur disposé le long du côté de bord supérieur dans ledit corps principal de coussin de sécurité gonflable (12, 46) pour guider un gaz de gonflage (G) d'un dispositif de gonflage (39) dans ledit corps principal de coussin de sécurité gonflable, ledit tube intérieur (32, 48) étant réalisé de manière à comporter des orifices d'alimentation (34) formés sur un côté inférieur d'une paroi circonférentielle de celui-ci pour délivrer un gaz de gonflage (G) dans ledit corps principal de coussin de sécurité gonflable,

ledit corps principal de coussin de sécurité gonflable (12) est replié en même temps que ledit tube intérieur (32, 48) disposé dans celui-ci verticalement de manière à se chevaucher à partir d'un état dans lequel une partie de paroi extérieure et une partie de paroi intérieure de celui-ci se chevauchent pour un rangement sur un côté de bord supérieur de l'ouverture,

ledit corps principal de coussin de sécurité gonflable (12) étant replié de manière à ce que lesdits orifices d'alimentation (34) dudit tube intérieur (32, 48) s'ouvrent sensiblement au centre dans la direction transversale dudit corps principal de coussin de sécurité gonflable ainsi replié sur un côté où les plis dudit corps principal de coussin de sécurité gonflable n'ont pas encore été dépliés lorsque ledit tube intérieur s'est gonflé sensiblement complètement après qu'un gaz de gonflage ait été autorisé à circuler dans le coussin de sécurité gonflable.

6. Système de coussin de sécurité gonflable de protection de tête (M) selon la revendication 5, dans lequel lesdits orifices d'alimentation (34) formés dans ledit tube intérieur (32, 48) sont disposés de manière à s'ouvrir vers le bas au niveau d'une partie sensiblement centrale dans une direction transversale dudit corps principal de coussin de sécurité gonflable (12) ainsi replié lorsque ledit corps principal de coussin de sécurité gonflable a été complètement replié.

7. Système de coussin de sécurité gonflable de protection de tête (M) selon la revendication 5, dans lequel lesdits orifices d'alimentation (34) dudit tube intérieur sont disposés de manière à s'ouvrir vers le bas sans s'étendre transversalement aux plis dudit corps principal de coussin de sécurité gonflable (12) lorsque ledit corps principal de coussin de sécurité gonflable a été complètement replié.

8. Système de coussin de sécurité gonflable de protection de tête (M) selon la revendication 1, dans lequel lesdits orifices d'alimentation (34) desdits moyens de distribution de gaz (32, 48) formés par un tube intérieur sont disposés sur un côté d'extrémité inférieure dudit tube intérieur ainsi replié et au niveau d'une partie sensiblement centrale dans la direction transversale dudit corps principal de coussin de sécurité gonflable (12, 46) ainsi replié lorsque ledit corps principal de coussin de sécurité gonflable a été complètement replié.

9. Système de coussin de sécurité gonflable de protection de tête (M) selon la revendication 1,

dans lequel la dimension diamétrale intérieure dudit tube intérieur (32, 48) est fixée de manière à tomber dans une plage de 25 à 60 mm de diamètre, la section transversale dudit tube intérieur (32, 48) lorsqu'il a été gonflé est So et la dimension dans le sens de la longueur L dudit tube intérieur (32, 48) est fixée de manière à tomber dans une plage de 1500 à 3000 mm, la surface d'ouverture totale s desdits orifices d'alimentation est fixée de manière à tomber dans une plage exprimée par l'expression suivante :

$$0{,}25 \times 10^{-3} \leq So/L.s \leq 0{,}55 \times 10^{-3}.$$

FIG.1

EP 1 228 930 B1

# FIG.2

# FIG.3

EP 1 228 930 B1

FIG.4

# FIG.5

FIG.6

# FIG.7

FIG.8

# FIG.9

33a 33b

S

32

I 33 O

32c

34C

# FIG.10

33a

w2

34(A~G)

34(A~G)

L1

33b

33

# FIG.11

## FIG.12A

## FIG.12B

FIG.13A

FIG.13B

FIG.14

# FIG.15

# FIG.16

EP 1 228 930 B1

FR ←

32

32

34    34A(S1)    34B(S2)    34C(S3)    34D(S4)    34E(S5)    34F(S6)    34G(S7)

# FIG.17

INTERNAL PRESSURE IN INNER TUBE

(HIGH)

(LOW)

(FAR)

(NEAR)

DISTANCE FROM INFLATOR

# FIG.18

# FIG.19A

# FIG.19B

# FIG.20

# FIG.21

# FIG.22

# FIG.23

## FIG.24A

## FIG.24B

## FIG.25A

## FIG.25B

# FIG.26

# FIG.27

(HIGH)

INTERNAL PRESSURE IN INNER TUBE

(LOW)

(FAR)    (NEAR)    (FAR)

DISTANCE FROM INFLATOR

EP 1 228 930 B1

# FIG.28

# FIG.29